# EUROPÄISCHE PATENTSCHRIFT

(11) **EP 2 975 708 B1**
(45) Veröffentlichungstag und Bekanntmachung des Hinweises auf die Patenterteilung: **26.04.2017**
(21) Anmeldenummer: 15171221.3
(22) Anmeldetag: 09.06.2015
(51) Int. Cl.: H02B 1/21

(54) **ADAPTERSYSTEM MIT EINEM ADAPTER FÜR SAMMELSCHIENEN UND EINEM ADAPTERANSCHLUSSMODUL**
ADAPTER SYSTEM WITH AN ADAPTER FOR BUS BARS AND AN ADAPTER CONNECTION MODULE
SYSTEME D'ADAPTATEUR DOTE D'UN ADAPTATEUR POUR RAILS COLLECTEURS ET MODULE DE RACCORDEMENT D'ADAPTATEUR

(30) Priorität: 10.06.2014 DE 102014108090
(43) Veröffentlichungstag der Anmeldung: 20.01.2016
(73) Patentinhaber: Klaus Bruchmann GmbH, 4616 Weißkirchen an der Traun (AT)
(72) Erfinder: Bruchmann, Klaus, 96450 Coburg (DE)
(74) Vertreter: Appelt, Christian W.

(56) Entgegenhaltungen:
- DE-A1-102005 009 856
- DE-B3-102013 110 789

## Beschreibung

Die vorliegende Erfindung bezieht sich auf ein Adaptersystem, mittels dem ein elektrisches Gerät, insbesondere ein elektrisches Installationsgerät, an einem Sammelschienensystem befestigt werden kann. Solche Adaptersysteme eignen sich insbesondere für elektrische Sammelschienensysteme, insbesondere für 3-phasige Sammelschienensysteme, und insbesondere zur Befestigung von Sicherungssystemen, Schaltersicherungseinheiten etc., aber auch für alle anderen elektrischen Installationsgeräte.

Die Kontaktierung von Sammelschienen-Adaptern erfolgt beispielsweise über ein mehrpoliges Anschlusskabel, das mehrere Leitungen (oder Pole) aufweist. Beispielsweise weist ein 3-phasiges Anschlusskabel für jede Phase eine einzelne Leitung auf, wobei in den bekannten Systemen jede Leitung einzeln an dem entsprechenden Kabelanschluss befestigt wird. Hierzu werden beispielsweise Schraub-, Löt- oder Schweißverbindungen genutzt. Ein solcher Sammelschienen-Adapter ist beispielsweise aus der DE 10 2005 009 856 A1 bekannt.

Basierend auf diesem Stand der Technik ist es eine Aufgabe der vorliegenden Erfindung, ein Adaptersystem zur Verfügung zu stellen, das eine einfache und komfortable Handhabung für den Nutzer ermöglicht, gleichzeitig einen sicheren Anschluss von Verbrauchern ermöglicht, wobei gleichzeitig hohe Sicherheitsanforderungen erfüllt werden.

Diese Aufgabe wird durch ein Adaptersystem für Sammelschienen gemäß Anspruch 1 oder, gemäß einer alternativen Lösung, durch ein Adaptersystem für Sammelschienen gemäß Anspruch 2 gelöst, die jeweils einen Adapter für Sammelschienen und ein Adapteranschlussmodul umfassen, wobei der Adapter für Sammelschienen und das Adapteranschlussmodul zum Bereitstellen einer Betriebsposition des Adaptersystems miteinander verbindbar sind.

Die Ansprüche 3 bis 17 betreffen besonders vorteilhafte Ausgestaltungen des erfindungsgemäßen Adaptersystems für Sammelschienen gemäß Anspruch 1 und/oder gemäß Anspruch 2.

Gemäß einem ersten Aspekt der Erfindung umfasst das Adaptersystem für Sammelschienen einen Adapter für Sammelschienen mit mindestens zwei Kontaktverbindungen zum Anschließen des Adapters an ein Sammelschienensystem, ein Gehäuse mit mindestens zwei Öffnungen zur Aufnahme jeweils eines Pols einer mehrpoligen Anschlussvorrichtung sowie eine Kabelanschlusseinrichtung.

Die Kabelanschlusseinrichtung, die in dem Gehäuse des Adapters angeordnet ist, umfasst eine Federklemmenstruktur und einen Hebelschalter. Die Federklemmenstruktur und der Federhalter sind so ausgebildet, dass die Federklemmenstruktur eine Federkraft ausübt, die zum einen den Hebelschalter in eine Einschaltstellung vorspannt und zum anderen eine Kraft auf alle eingesetzten Pole einer mehrpoligen Anschlussvorrichtung ausübt, wobei typischerweise und bevorzugt 3-polige Anschlussvorrichtungen verwendet werden. Dies führt dazu, dass die eingesetzten Pole nicht aus der Kabelanschlusseinrichtung entnommen werden können, wenn sich der Hebelschalter in seiner Einschaltstellung befindet. Dies wird insbesondere zum einen durch die von der Federklemmenstruktur ausgeübte Federkraft erzielt, zum anderen durch die geometrische Anordnung der Federklemmenstruktur, die eine Entnahme der eingesetzten Pole verhindert.

Der Hebelschalter kann jedoch durch den Nutzer entgegen der von der Federklemmenstruktur ausgeübten Federkraft von seiner Einschaltstellung in eine Betätigungsstellung bewegt werden, so dass in der Betätigungsstellung des Hebelschalters alle eingesetzten Pole der mehrpoligen Anschlussvorrichtung aus der Kabelanschlusseinrichtung entnommen werden können.

Eine besonders vorteilhafte Ausgestaltung eines solchen Adapters für Sammelschienen ist in der DE 10 2013 110 789 B3, beschrieben.

Gemäß einem ersten Aspekt der Erfindung umfasst das Adaptersystem für Sammelschienen auch ein Adapteranschlussmodul mit einem Gehäuse, aus dem mindestens zwei Pole einer adapterseitigen Anschlussvorrichtung zum Einführen in die mindestens zwei Öffnungen des Gehäuses des Adapters für Sammelschienen herausragen und das eine mindestens 2-polige, bevorzugt 3-polige, verbraucherseitige Anschlussvorrichtung zum Anschluss eines oder mehrerer elektrischer Verbraucher aufweist. Die adapterseitige Anschlussvorrichtung ist über eine unterbrechbare Brückenschaltung mit der verbraucherseitigen Anschlussvorrichtung verbunden.

Das Adapteranschlussmodul umfasst ferner einen Hauptschalter, der zwischen einer Einschaltstellung und einer Ausschaltstellung hin- und herschaltbar ist, sowie einen Betätigungshebel zum Betätigen des Hebelschalters des Adapters für Sammelschienen.

Die unterbrechbare Brückenschaltung befindet sich in ihrer Einschaltstellung, wenn sich der Hauptschalter in der Einschaltstellung befindet, und die Brückenschaltung befindet sich in ihrer Unterbrecherstellung, wenn sich der Hauptschalter in seiner Ausschaltstellung befindet.

Gemäß einem ersten Aspekt der Erfindung umfasst der Hauptschalter an zumindest einem seiner Bauteile eine Öffnung, die so angeordnet und ausgebildet ist, dass der Betätigungshebel mittels eines Werkzeuges, das durch diese Öffnung an dem Hauptschalter oder Bauteilen des Hauptschalters in das Gehäuse des Adapteranschlussmoduls eingeführt werden kann, in seine Betätigungsstellung gezwungen werden kann, wenn sich der Hauptschalter in seiner Ausschaltstellung befindet. Die Öffnung des Hauptschalters beziehungsweise an dem Bauteil des Hauptschalters wird jedoch durch andere Elemente oder Bauteile des Adapteranschlussmoduls verschlossen, wenn sich der Hauptschalter in seiner Einschaltstellung befindet oder wenn er sich nicht in seiner Ausschaltstellung befindet. Dies führt dazu, dass kein Werkzeug in das Gehäuse eingeführt werden kann, um den Betätigungshebel in seine Betätigungsstellung zu bewegen beziehungsweise zu zwingen.

Ein Adaptersystem gemäß einem ersten Aspekt der Erfindung hat mannigfaltige Vorteile: Durch die bevorzugte Ausgestaltung des Adapters für Sammelschienen, insbesondere durch die besonders vorteilhafte Ausgestaltung der Federklemmenstruktur und des Hebelschalters, ist es möglich, durch die Betätigung eines einzelnen Elements, nämlich des Hebelschalters, alle Pole einer mehrpoligen Anschlussvorrichtung gleichzeitig in die Kabelanschlusseinrichtung einzuführen und durch ein Loslassen des Hebelschalters den elektrischen Kontakt herzustellen. Insbesondere ist es möglich, durch ein Betätigen lediglich des Hebelschalters sämtliche Pole der mehrpoligen Anschlussvorrichtung zu lösen, so dass diese vollständig entnommen werden können, während bevorzugt ein Einsetzen der Anschlussvorrichtung durch die geometrische Ausgestaltung der Elemente auch ohne eine Betätigung des Hebelschalters möglich ist. Dies erleichtert die Bedienung des Adapters für Sammelschienen durch den Benutzer und stellt gleichzeitig sicher, dass Fehlbedienungen vermieden werden.

Das Vorsehen des erfindungsgemäßen Adapteranschlussmoduls, das mit einem Adapter für Sammelschienen gemeinsam verwendet wird, um das erfindungsgemäße Adaptersystem zur Verfügung zu stellen, führt zu weiteren Vorteilen, die mit den bereits oben beschriebenen Vorteilen direkt zusammenwirken: Zum einen ist der Anschluss eines Adapteranschlussmoduls an den Adapter für Sammelschienen durch die Tatsache, dass es sich um ein einzelnes, vollständiges Bauteil handelt, für den Benutzer sehr vorteilhaft und einfach. Zum anderen wird durch das Vorsehen eines einzelnen Betätigungshebels zum Betätigen des Hebelschalters des Adapters für Sammelschienen ein Gesamtsystem zur Verfügung gestellt, das durch den Nutzer sehr einfach bedienbar ist, so dass auch das Gesamtsystem durch die Betätigung eines einzelnen Elements, nämlich des Betätigungshebels des Adapteranschlussmoduls, montiert und demontiert werden kann.

Der Benutzer kann daher durch Betätigen des Betätigungshebels, bevorzugt durch ein Drücken auf den Betätigungshebel, mittels eines Werkzeuges, das durch eine Öffnung des Hauptschalter in das Gehäuse des Adapteranschlussmoduls eingeführt werden kann, direkt oder indirekt den Hebelschalter des Adapters für Sammelschienen betätigen und in die Betätigungsstellung zwingen oder drücken, so dass hierdurch alle Pole der adapterseitigen Anschlussvorrichtung des Adapteranschlussmoduls zusammen gelöst werden können.

Gemäß einem ersten Aspekt stellt die Erfindung dabei sicher, dass der Betätigungshebel nur durch ein Einführen eines Werkzeuges durch die an einem Bauteil des Hauptschalters vorgesehene Öffnung möglich ist, was wiederum nur dann ermöglicht wird, wenn sich der Hauptschalter in seiner Ausschaltstellung befindet, wobei die Öffnung des Hauptschalters so verschlossen ist, dass sich kein Werkzeug einführen lässt, wenn der Hauptschalter sich in seiner Einschaltstellung befindet. Ein versehentliches Lösen der Pole der adapterseitigen Anschlussvorrichtung aus der Federklemmenstruktur des Adapters für Sammelschienen während eines Betriebszustandes des Systems wird daher zuverlässig vermieden.

Ferner wird durch das erfindungsgemäße Adaptersystem gemäß einem ersten Aspekt auch sichergestellt, dass in den Fällen, in denen der Betätigungshebel mittels eines Werkzeuges von dem Benutzer in seiner Betätigungsstellung gezwungen werden kann, die unterbrechbare Brückenschaltung sich bereits in ihrer Unterbrecherstellung befindet, so dass bereits vor einem eventuellen Betätigen des Betätigungshebels die Verbraucher sicher von dem Sammelschienensystem getrennt sind und daher lastfrei sind. Dies stellt zum einen sicher, dass keinerlei Fehlbedienungen stattfinden, und stellt ferner eine hohe Sicherheit für den Nutzer dar. Ferner wird auch vermieden, dass an den Polen und/oder der Federklemmenstruktur ein Schaltlichtbogen entsteht, da zum Zeitpunkt der Trennung der adapterseitigen Anschlussvorrichtung von der Federklemmenstruktur diese bereits lastlos ist.

Ein kontrolliertes Trennen der Verbindung beziehungsweise der Kontakte wird daher vorher durch das kontrollierte Bewegen der Brückenschaltung in ihre Unterbrecherstellung bewirkt, was wiederum durch das Bewegen des Hauptschalters in seine Ausschaltstellung bewirkt wird.

Das erfindungsgemäße Gesamtsystem mit einem Adapter für Sammelschienen einerseits und einem Adapteranschlussmodul andererseits stellt daher ein sehr einfach zu handhabendes System zur Verfügung, bei dem zum einen sämtliche Vorgänge kontrolliert und unter Vermeidung von eventuellen Schaltlichtbögen durchgeführt werden, zum anderen Fehlbedienungen durch den Nutzer sicher vermieden werden.

Gemäß einem zweiten eigenständigen Aspekt der Erfindung, der in Anspruch 2 definiert ist, besteht auch die Möglichkeit, einen Adapter für Sammelschienen und einen Adapteranschlussmodul sowie ein Adaptersystem wie oben beschrieben zur Verfügung zu stellen, bei dem jedoch nicht zwangsweise eine Öffnung an einem Bauteil des Hauptschalters vorgesehen ist, so dass der Betätigungshebel mittels eines Werkzeuges, das durch diese Öffnung des Hauptschalters in das Gehäuse des Adapteranschlussmoduls eingeführt werden kann, in seine Betätigungsstellung gezwungen werden kann. Stattdessen (oder alternativ auch zusätzlich) kann der Hauptschalter so mit dem Betätigungshebel gekoppelt sein, dass der Hauptschalter den Betätigungshebel automatisch in seine Betätigungsstellung drückt, wenn er über einen bestimmten Winkel über seine Ausschaltstellung hinaus in eine Montagestellung gedreht wird.

Es ist beispielsweise daher möglich, das Adaptersystem und insbesondere das Adapteranschlussmodul so auszubilden, dass ein Hauptschalter bevorzugt um einen ersten Winkel α gedreht werden kann, so dass er zwischen seiner Einschaltstellung und seiner Ausschaltstellung hin- und herbewegt werden kann, während der Hauptschalter bevorzugt über einen weiteren Winkel β über die Ausschaltstellung hinaus in seine Montagestellung gedreht werden kann, wobei erst bei diesem Bewegen des Hauptschalters aus seiner Ausschaltstellung hinaus, in eine Montagestellung, der Betätigungshebel automatisch in seine Betätigungsstellung gezwungen wird.

Eine solche Ausgestaltung, die eine zweite Alternative und damit auch einen unabhängigen erfinderischen Aspekt darstellt, ermöglicht es dem Nutzer, den Betätigungshebel in die Betätigungsstellung zu zwingen, ohne ein zusätzliches Werkzeug zu verwenden. Wird dennoch zusätzlich eine Öffnung in einem Bauteil des Hauptschalters und/oder des Adapteranschlussmoduls vorgesehen (ähnlich wie sie oben im Hinblick auf eine mögliche Ausgestaltung beschrieben worden ist), die in einer Ausschaltstellung das Einführen eines Werkzeuges ermöglicht, kann der Benutzer auch wählen, ob er den Betätigungshebel mittels eines Werkzeuges in die Betätigungsstellung zwingt, wenn der Hauptschalter in seiner Ausschaltstellung ist, oder aber alternativ den Hauptschalter um einen weiteren Winkel dreht, so dass durch diese weitere Drehung, oder alternativ auch eine andere Bewegung des Hauptschalter, beispielsweise ein Drücken des Hauptschalters, das nur in der Ausschaltstellung möglich ist, der Betätigungshebel in seine Betätigungsstellung gedrückt beziehungsweise gezwungen wird.

Gemäß einer bevorzugten Ausführungsform ist der Hauptschalter zwischen seiner Einschaltstellung und seiner Ausschaltstellung drehbar, insbesondere um einen vorbestimmten Winkel drehbar. Eine solche Drehbewegung ist für den Nutzer einfach durchführbar, womit kontrollierte Einschalt- und Ausschaltvorgänge sichergestellt werden, ferner ist ein drehbarer Schalter intuitiv für den Nutzer von Vorteil. Ein vorbestimmter Winkel, bevorzugt beispielsweise zwischen 60° und 120°, besonders bevorzugt zwischen 80° und 100°, stellt ferner sicher, dass der Hauptschalter durch den Nutzer einfach und mit einer einzigen Handbewegung, ohne eventuell notwendiges Umgreifen, durchgeführt werden kann.

Bevorzugt ist der Betätigungshebel des Adapteranschlussmoduls zwischen einer Betätigungsstellung und einer Betriebsstellung in seiner Längsrichtung um eine vorbestimmte Strecke bewegbar. Dies stellt sicher, dass die Kraftübertragung auf den Hebelschalter des Adapters für Sammelschienen auf besonders effektive Art und Weise funktioniert. Bevorzugt ist dabei der Betätigungshebel so ausgebildet und ausgerichtet, dass seine Bewegungsrichtung so ausgerichtet ist, dass der Nutzer ein Werkzeug, das er durch die Öffnung des Hauptschaltergehäuses einführt, lediglich auf ein oberes, durch die Öffnung zugängliches Teil des Betätigungshebels drücken braucht, so dass die Kraft des Nutzers auf effektive Weise umgesetzt wird.

Bevorzugt ist dabei vorgesehen, dass der Betätigungshebel an der Stelle, an der ein Werkzeug angreifen kann, so ausgebildet ist, dass das Werkzeug, beispielsweise ein Schraubendreher oder ein Imbus-Schlüssel oder ein anderes, ähnliches Element, einen guten Halt findet, beispielsweise dadurch, dass eine Vertiefung auf der oberen Seite des Betätigungshebels vorgesehen ist, die wiederum bevorzugt eine zu dem zu verwendenden Werkzeug passende Form aufweist.

Bevorzugt umfasst das Adapteranschlussmodul pro Pol eine Sicherungsaufnahme zur Aufnahme von Sicherungen, wobei bevorzugt drei Sicherungsaufnahmen für 3-polige Systeme vorgesehen sind. Diese Sicherungsaufnahmen sind bevorzugt zwischen einer Betriebsposition und einer Entnahmeposition bewegbar, so dass in einer Entnahmeposition eine Sicherung vom Nutzer aus der Sicherungsaufnahme entnommen werden kann, beispielsweise wenn eine Sicherung ausgetauscht werden soll.

Die Sicherungsaufnahmen können daher bevorzugt beispielsweise in Form einer Art Schublade vorgesehen sein, die bevorzugt aus dem Gehäuse des Adapteranschlussmoduls herausgezogen werden können. Dies ermöglicht eine besonders einfache Wartung des Adaptersystems und eine einfache Prüfung, ob beispielsweise die richtigen Sicherungen eingesetzt sind oder beispielsweise eine Sicherung defekt ist.

Gemäß einer weiteren bevorzugten Ausführungsform umfasst das Adapteranschlussmodul ferner eine Verriegelungsvorrichtung für Sicherungsaufnahmen, die so mit dem Hauptschalter gekoppelt ist, dass die Verriegelungsvorrichtung eine Bewegung jeder Sicherungsaufnahme aus ihrer Betriebsposition heraus in Richtung der Entnahmeposition verhindert, wenn sich der Hauptschalter in seiner Einschaltstellung befindet. Dies stellt sicher, dass nicht versehentlich die Sicherungsaufnahmen aus ihrer Betriebsposition entnommen werden, wenn sich das System in Betrieb befindet, da dadurch ungewollte Schaltlichtbögen und Störungen des Systems auftreten können. Auch wird hierdurch eine mögliche Gefährdung des Nutzers vermieden.

Bevorzugt sind der Hauptschalter und die Verriegelungsvorrichtung so gekoppelt, dass eine Drehbewegung des Hauptschalters in eine lineare oder im Wesentlichen lineare Bewegung der Verriegelungsvorrichtung transformiert wird. Dies hat den Vorteil, dass ein im Wesentlichen planares Element verwendbar ist, das sich zumindest vor Teile der Sicherungsaufnahme schiebt, wenn sich der Hauptschalter in seiner Betriebsposition befindet. Diese lineare Verschiebung der Elemente der Verriegelungsvorrichtung ist sehr platzsparend, was bei den teilweise engen Verhältnissen, in denen ein Adaptersystem eingebaut werden muss, sehr hilfreich ist. Auch wird vermieden, dass Teile der Verriegelungsvorrichtung versehentlich abgebrochen werden, da alle Elemente der Verriegelungsvorrichtung eng an dem Gehäuse des Adapteranschlussmoduls geführt werden können.

Gemäß einer weiteren bevorzugten Ausführungsform umfasst der Hauptschalter ein bewegbares Bedienelement, das zwischen der Einschaltstellung und der Ausschaltstellung bewegt wird, wobei dieses bewegbare Bedienelement, bevorzugt ein drehbares Bedienelement, eine oder mehrere Öffnungen aufweist, die entweder in der Einschaltstellung oder in der Ausschaltstellung oder sowohl in der Einschaltstellung als auch in der Ausschaltstellung mit korrespondierenden Öffnungen des Adapteranschlussmoduls so fluchten, dass das Bedienelement mittels einer Schlossvorrichtung in der Einschaltstellung und/oder in der Ausschaltstellung verriegelt werden kann. Damit kann sichergestellt werden, dass ein gewünschter Betriebszustand, nämlich ein Einschaltzustand oder ein Ausschaltzustand, festgelegt wird und durch einen Nutzer nicht versehentlich geändert werden kann. Insbesondere beispielsweise bei defekten Geräten oder auch Verbrauchern kann daher beispielsweise das Gesamtsystem in der Ausschaltstellung verriegelt werden.

Bei einer besonders bevorzugten Ausführungsform umfasst das Adapteranschlussmodul ferner ein Übertragungselement, das an einem Teil des Adapteranschlussmoduls bewegbar, bevorzugt drehbar, befestigt ist. Dies hat den Vorteil, dass das Betätigungselement den Hebelschalter des Adapters für Sammelschienen über das Übertragungselement indirekt in seine Betätigungsstellung zwingt und die Kraft auf besonders effektive Weise übertragen wird.

Bevorzugt ist das Übertragungselement nur um einen festgelegten Winkel drehbar, so dass beispielsweise das Übertragungselement in dem Gehäuse des Adapteranschlussmoduls gehalten werden kann beziehungsweise die Strecke, über die sich das Übertragungselement bewegen kann, eingeschränkt wird. Hierdurch kann beispielsweise auch auf einfache Weise vermieden werden, dass das Übertragungselement aus dem Gehäuse rutscht, auch wenn es nicht anderweitig befestigt ist, so dass zusätzliche Befestigungs- oder Begrenzungselemente nicht erforderlich sind.

Bevorzugt umfasst das Anschlussmodul weitere Vorrichtungen, wie beispielsweise ein elektronisches Netzteil, eine Messeinrichtung zur Messung von Betriebszuständen des Systems, beispielsweise Spannung, Stromstärke, Leistung, Betriebsstunden etc., einen Mikroprozessor zur Steuerung und Überwachung des Systems, eine Anzeigevorrichtung, um relevante Informationen dem Benutzer anzuzeigen, ein Bedienfeld, so dass bestimmte Eingaben durch den Nutzer vorgenommen werden können, eine Schalteinheit, zum Beispiel einen Schütz, ein Relais etc., sowie eine oder mehrere Ein- und Ausgabeeinheiten, zum Beispiel eine Bus-Anbindung, nur um einige Beispiele zu nennen.

Gemäß einer besonders bevorzugten Ausführungsform der Erfindung gemäß dem zweiten Aspekt ist ferner eine Betätigungskurve vorgesehen, die so ausgebildet ist, dass der Betätigungshebel des Adapteranschlussmoduls direkt oder indirekt von dieser in seine Betätigungsstellung gezwungen wird, wenn sich der Hauptschalter in seiner Montagestellung befindet. Bevorzugt ist diese Betätigungskurve direkt an einem Bauteil des Hauptschalters angeordnet.

Bei einer weiteren bevorzugten Ausführungsform der Erfindung gemäß dem zweiten Aspekt umfasst die Vorrichtung auch eine Sperrvorrichtung, die zwischen einer Sperrstellung und einer Montagestellung einstellbar ist. Hiermit kann sichergestellt werden, dass ohne eine Betätigung der Sperrvorrichtung und ein Zwingen der Sperrvorrichtung in ihre Montagestellung der Hauptschalter nur zwischen seiner Einschaltstellung und seiner Ausschaltstellung bewegt werden kann, um ein versehentliches Lösen oder auch nur teilweises Lösen des Adapteranschlussmoduls zu verhindern.

Gemäß einer bevorzugten Ausführungsform umfasst eine solche Sperrvorrichtung ferner eine Federvorrichtung, die so ausgebildet ist, dass die Sperrvorrichtung in ihrer Sperrstellung vorgespannt ist.

Bevorzugt umfasst ein Adaptersystem gemäß dem zweiten Aspekt der Erfindung auch eine Öffnung, in die ein Werkzeug eingeführt werden kann, zumindest wenn sich der Hauptschalter in seiner Ausschaltstellung befindet, so dass die Sperrvorrichtung mittels dieses Werkzeugs in ihre Montagestellung gezwungen werden kann.

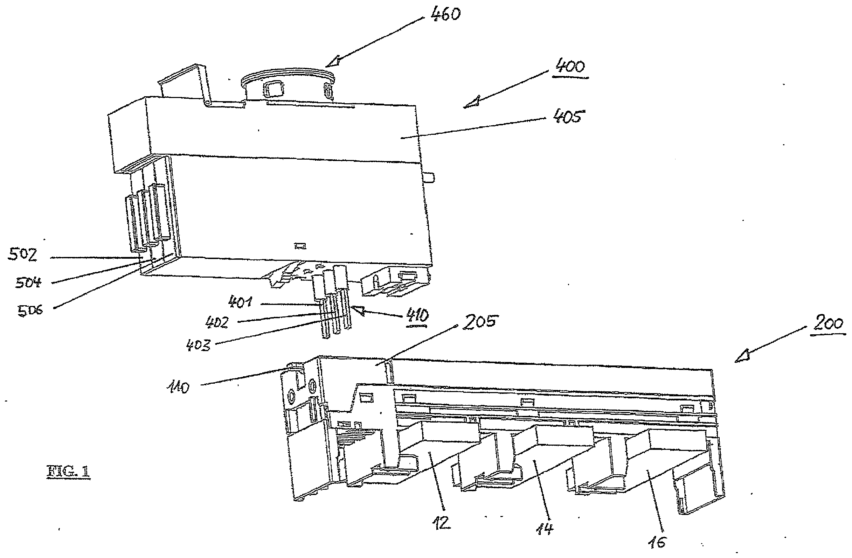

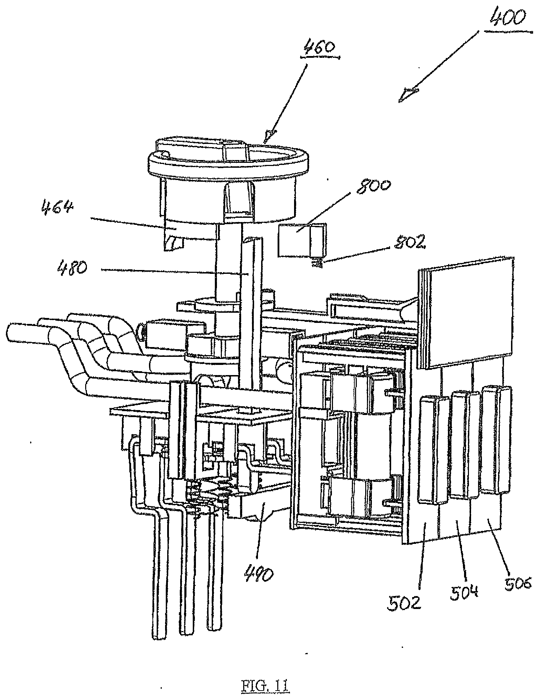

Diese und weitere Vorteile und Merkmale der Erfindung werden anhand der beigefügten Zeichnungen, die besonders vorteilhafte Ausführungsformen des erfindungsgemäßen Adaptersystems oder Teile des Adaptersystems zeigen, noch deutlicher, wobei sich die Figuren 1 bis 10 insbesondere auf eine Ausführungsform gemäß einem ersten Aspekt der Erfindung beziehen, während sich die Figuren 11 bis 14 insbesondere auf eine Ausführungsform gemäß dem zweiten Aspekt der Erfindung beziehen. Es zeigen:
- Fig. 1: eine perspektivische Ansicht einer Ausführungsform eines Adapters für Sammelschienen und eines Adapteranschlussmoduls in getrenntem Zustand;
- Fig. 2: eine Draufsicht auf eine Ausführungsform eines Adaptersystems, wobei sich der Hauptschalter in seiner Einschaltstellung befindet;
- Fig. 3: eine Draufsicht auf eine Ausführungsform eines Adaptersystems, wobei sich der Hauptschalter in seiner Ausschaltstellung befindet;
- Fig. 4: einen Querschnitt durch eine Ausführungsform eines erfindungsgemäßen Adaptersystems, bei dem sich der Hauptschalter in seiner Einschaltstellung befindet;
- Fig. 5: eine perspektivische Ansicht einiger Teile eines erfindungsgemäßen Adaptersystems, wobei sich der Hauptschalter in seiner Einschaltstellung befindet;
- Fig. 6: einen Querschnitt durch eine Ausführungsform eines erfindungsgemäßen Adaptersystems, bei dem sich der Hauptschalter in seiner Ausschaltstellung und der Betätigungshebel in seiner Betätigungsstellung befinden;
- Fig. 7: eine perspektivische Ansicht einiger Teile eines erfindungsgemäßen Adaptersystems, wobei sich der Hauptschalter in seiner Ausschaltstellung und der Betätigungshebel in seiner Betätigungsstellung befinden;
- Fig. 8: eine perspektivische Darstellung von Bauteilen einer Ausführungsform eines Hauptschalters eines erfindungsgemäßen Adapteranschlussmoduls;
- Fig. 9: die in Fig. 8 dargestellten Bauteile eines Hauptschalters in zusammengesetzter Konfiguration und in der Ausschaltstellung des Hauptschalters;
- Figs. 10A - 10D: perspektivische Ansichten einer Kabelanschlusseinrichtung einer Ausführungsform eines Adapters für Sammelschienen in einem erfindungsgemäßen Adaptersystem;
- Fig.11: eine perspektivische Darstellung einiger Elemente einer Ausführungsform eines erfindungsgemäßen Adapteranschlussmoduls gemäß dem zweiten Aspekt der Erfindung, wobei sich der Hauptschalter in seiner Einschaltstellung befindet;
- Fig. 12: eine perspektivische Darstellung einiger Elemente einer Ausführungsform eines erfindungsgemäßen Adapteranschlussmoduls gemäß dem zweiten Aspekt der Erfindung, wobei sich der Hauptschalter in seiner Ausschaltstellung befindet;
- Fig. 13: eine perspektivische Darstellung einiger Elemente einer Ausführungsform eines erfindungsgemäßen Adapteranschlussmoduls gemäß dem zweiten Aspekt der Erfindung, wobei sich der Hauptschalter in seiner Montagestellung befindet; und
- Fig. 14: eine Draufsicht auf eine Ausführungsform eines Adapteranschlussmoduls gemäß dem zweiten Aspekt der Erfindung, wobei sich der Hauptschalter in seiner Montagestellung befindet.

Fig. 1 zeigt perspektivisch eine Ausführungsform eines erfindungsgemäßen Adaptersystems für Sammelschienen, das einen Adapter 200 für Sammelschienen und eine Adapteranschlussmodul 400 umfasst, die zum Bereitstellen einer Betriebsposition des Adaptersystems miteinander verbindbar sind, zur Verdeutlichung der einzelnen Bauteile jedoch in Fig. 1 noch in einem nicht-verbundenen Zustand dargestellt sind.

Der Adapter 200 für Sammelschienen 12, 14, 16 weist ein Gehäuse 205 auf, in dem Öffnungen (in Fig. 1 nicht sichtbar, da auf der Oberseite angeordnet) vorgesehen sind, so dass Pole 401, 402, 403 einer adapterseitigen Anschlussvorrichtung 410 des Adapteranschlussmoduls 400 eingesetzt werden können.

Der Adapter 200 für Sammelschienen weist auch einen Hebelschalter 110 auf, der, in Fig. 1 nach unten, gedrückt werden muss, damit eingesetzte Pole 401, 402, 403 der Anschlussvorrichtung 410 des Adapteranschlussmoduls 400 entnommen werden können, wenn diese eingesetzt sind. Diese Funktion und die zugehörigen Elemente werden in den nachfolgenden Zeichnungen noch näher erläutert werden.

Fig. 1 zeigt auch das Adapteranschlussmodul 400, das ein Gehäuse 405 aufweist, in das Sicherungsaufnahmen 502, 504, 506 zur Aufnahme von Sicherungen eingeschoben sind und die zur Entnahme von Sicherungen herausgezogen werden können, in Fig. 1 nach links.

Auf einer Oberseite des Gehäuses 405 des Adapteranschlussmoduls 400 ist ein Hauptschalter 460 vorgesehen.

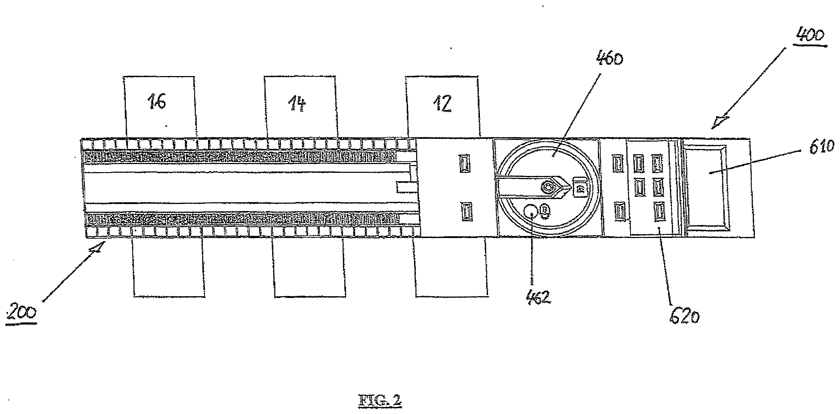

Fig. 2 zeigt eine Draufsicht auf eine Ausführungsform eines Adaptersystems, wobei das Adapteranschlussmodul 400 auf den Adapter 200 für Sammelschienen aufgesetzt ist.

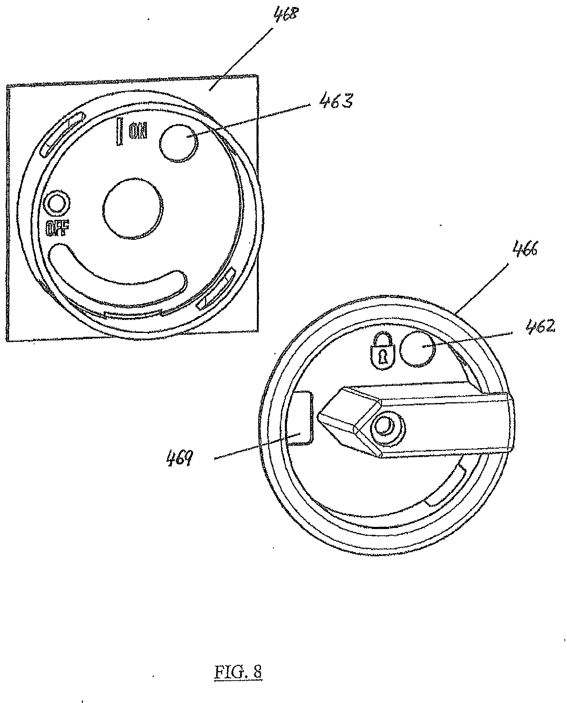

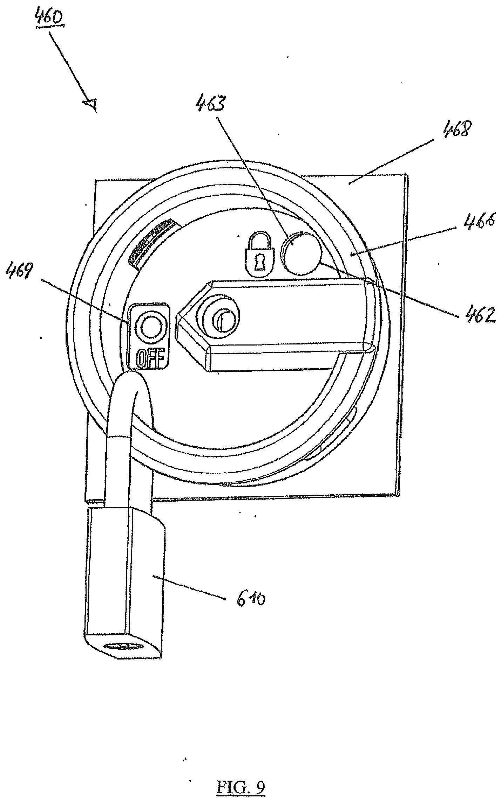

Der Hauptschalter 460 befindet sich in seiner Einschaltstellung, so dass eine Öffnung 462 in einem Bauteil des Hauptschalters durch andere Elemente des Adapteranschlussmoduls 400 verschlossen ist, so dass es nicht möglich ist, durch die (verschlossene) Öffnung 462 ein Werkzeug in das Gehäuse 405 des Adapteranschlussmoduls einzuführen. Die Elemente des Hauptschalters werden insbesondere in Zusammenhang mit den Figuren 8 und 9 noch genauer gezeigt und erläutert.

Wie in Fig. 2 ersichtlich, kann das Adapteranschlussmodul, insbesondere das Adaptersystem, weitere Funktionselemente umfassen, wie beispielsweise eine Anzeigevorrichtung 610, die in der Lage ist, bestimmte Betriebswerte der Vorrichtung anzuzeigen, oder ein Bedienfeld 620, mit dem der Nutzer das Adaptersystem steuern kann.

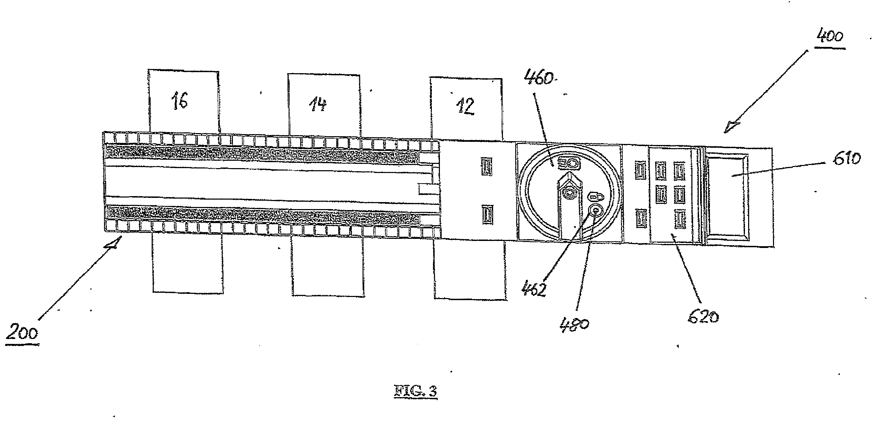

Fig. 3 zeigt eine Draufsicht auf das in Fig. 2 gezeigte Adaptersystem, wobei sich jedoch der Hauptschalter 460 in seiner Ausschaltstellung befindet.

Die Öffnung 462 in einem Bauteil des Hauptschalters 460 fluchtet in der Ausschaltstellung des Hauptschalters 460 mit einer weiteren Öffnung in dem Gehäuse 405 des Adapteranschlussmoduls, so dass ein Werkzeug, beispielsweise ein Schraubendreher, durch die Öffnung 462 in das Gehäuse 405 des Adapteranschlussmoduls 400 eingeführt werden kann, so dass ein Betätigungshebel 480, der durch die Öffnung 462 sichtbar ist, betätigt werden kann und in seine Betätigungsstellung gezwungen werden kann, indem beispielsweise der Schraubendreher oder ein anderes Werkzeug auf den Betätigungshebel 480 gedrückt wird.

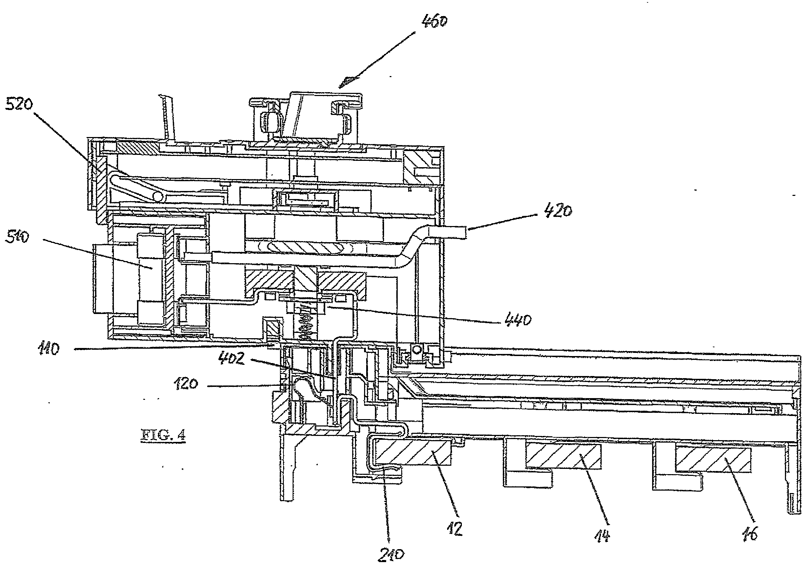

Fig. 4 zeigt einen Querschnitt durch ein erfindungsgemäßes Adaptersystem, bei dem sich der Hauptschalter 460 in seiner Einschaltstellung befindet. In dieser Einschaltstellung des Hauptschalters 460 befindet sich auch die Brückenschaltung 440 in ihrer Einschaltstellung, so dass die adapterseitige Anschlussvorrichtung (in Fig. 4 sieht man ein Kontaktelement 402 dieser adapterseitigen Anschlussvorrichtung) über die Brückenschaltung 440 und über Sicherungen 510 mit einer verbraucherseitigen Anschlussvorrichtung 420 verbunden ist.

Wie ebenfalls in Fig. 4 gut ersichtlich befindet sich der Hebelschalter 110 des Adapters 200 in einer Einschaltstellung, so dass eine Feder der Federklemmenstruktur 120 das Kontaktelement 402 an Teile der Kontaktvorrichtung 210 drückt, so dass sich das gesamte Adaptersystem in seiner Betriebsstellung befindet.

Aufgrund der Federkraft der Federklemmenstruktur 120 und aufgrund der geometrischen Anordnung der Federelemente der Federklemmenstruktur 120, die in ihrem Kontaktbereich so gegenüber dem Kontaktelement 402 winkelig angeordnet ist, das ein Herausziehen des Kontaktelements 402 dazu führen würde, dass sich das entsprechende Federelement nach oben verbiegen würde und sich mit dem Kontaktelement 402 verkeilen oder verklemmen würde, ist ein Herausziehen des Kontaktelements 402 beziehungsweise des Adapteranschlussmoduls nicht möglich, solange sich der Hebelschalter 110 des Adapters 200 in seiner Einschaltstellung befindet.

Fig. 4 zeigt auch eine Verriegelungsvorrichtung 520, die (teilweise) vor den Sicherungsaufnahmen 502 angeordnet ist, so dass die Sicherungsaufnahmen 502 nicht geöffnet, in Fig. 4 nach links verschoben, werden können, solange sich der Hauptschalter in seiner Einschaltstellung befindet.

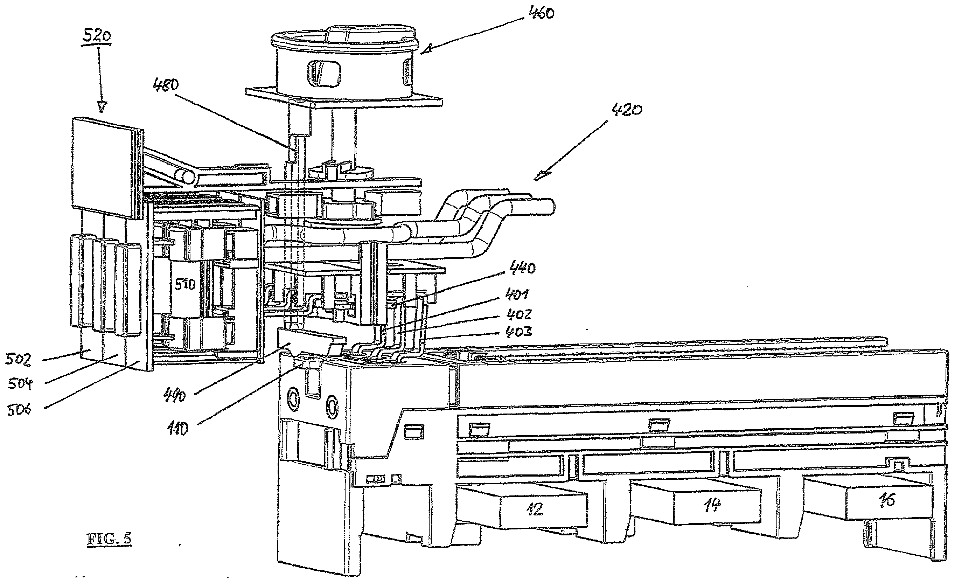

Fig. 5 zeigt eine perspektivische Darstellung einiger Teile des erfindungsgemäßen Adaptersystems, wobei sich der Hauptschalter 460 in seiner Einschaltstellung befindet, wie es auch in Zusammenhang mit Fig. 4 erläutert worden ist, so dass sich auch die Brückenschaltung in ihrer Einschaltstellung (oder auch Kontaktstellung) befindet.

Fig. 5 zeigt sehr deutlich den Betätigungshebel 480, der sich in einer Betriebsstellung befindet und ein Übertragungselement 490 kontaktiert, das sich ebenfalls in einer Betriebsstellung befindet und den Hebelschalter 110 des Adapters 200 kontaktiert, aber nicht mit Kraft beaufschlagt, so dass der Hebelschalter 110 sich in seiner Einschaltstellung befindet.

Die Verriegelungsvorrichtung 520 befindet sich in ihrer Verriegelungsposition, in Fig. 5 in einer unteren Position, wobei diese Position durch eine Kopplung mit dem Hauptschalter 460 sichergestellt ist.

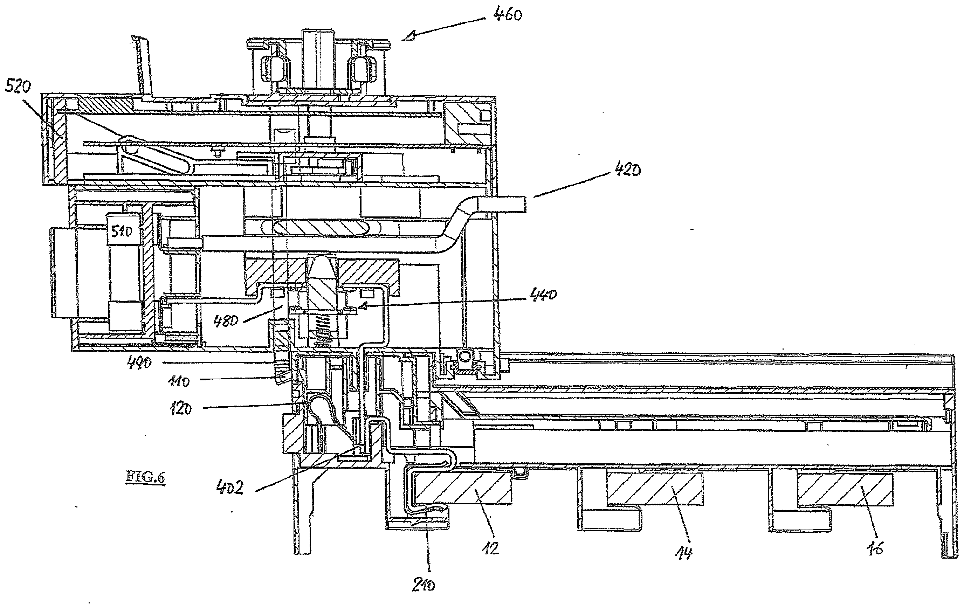

Fig. 6 zeigt einen Querschnitt durch eine Ausführungsform eines erfindungsgemäßen Adaptersystems, ähnlich wie in Fig. 4, wobei sich der Hauptschalter 460 in Fig. 6 in seiner Ausschaltstellung befindet, wobei der Hauptschalter 460 hierzu bei dieser Ausführungsform um 90° gedreht worden ist.

Aufgrund der Kopplung des Hauptschalters 460 mit der Verriegelungsvorrichtung 520 ist die Verriegelungsvorrichtung 520 verschoben worden, in Fig. 6 nach oben, so dass sich die Verriegelungsvorrichtung 520 nicht mehr vor den Sicherungsaufnahmen 506 befindet, so dass es möglich wäre, die Sicherungsaufnahmen 506 (und die anderen Sicherungsaufnahmen, die in dieser Figur nicht gezeigt sind) herauszuziehen, in Fig. 6 nach links, so dass die Sicherungen 510 entnommen werden können.

Ferner wird durch ein Bewegen des Hauptschalters 460 in die Ausschaltstellung automatisch die Brückenschaltung 440 unterbrochen, so dass das Adapteranschlussmodul lastfrei ist, so dass auch die Sicherungen gefahrlos und ohne Auftreten von Schaltlichtbögen entnommen werden können.

Wenn sich der Hauptschalter 460 in seiner Ausschaltstellung befindet, kann, wie in Zusammenhang mit Fig. 3 beschrieben, ein Werkzeug (nicht gezeigt) in das Gehäuse 405 des Adapteranschlussmoduls 400 eingeführt werden, so dass der Betätigungshebel 480 in seine Betätigungsstellung, in Fig. 6 nach unten, gedrückt werden kann, so dass er auf das Übertragungselement 490 eine Kraft ausübt, so dass auch das Übertragungselement in seine Betätigungsstellung gezwungen ist, wobei das Übertragungselement 490 den Hebelschalter 110 ebenfalls in seine Betätigungsstellung, in Fig. 6 nach unten, drückt, wie es in Fig. 6 dargestellt ist.

Durch ein Herunterdrücken des Hebelschalters 110 in seine Betätigungsstellung wird eine Kraft auf die Federelemente der Federklemmenstruktur 120 ausgeübt, so dass diese von dem Kontaktelement 402 weggedrückt werden, so dass auch zwischen der Federklemmenstruktur 120 und der adapterseitigen Anschlussvorrichtung kein Kontakt mehr besteht.

Durch diese erfindungsgemäße Ausgestaltung ist es daher zum einen möglich, dass in einem ersten Schritt, wenn der Hauptschalter 460 von seiner Einschaltstellung in seine Ausschaltstellung bewegt wird, automatisch die Brückenschaltung unterbrochen wird, so dass ein kontrolliertes Abschalten des Systems ohne Auftreten von Schaltlichtbögen realisiert wird.

Erst danach ist es beispielsweise möglich, die Sicherungsaufnahmen zu entnehmen, um beispielsweise Sicherungen auszutauschen oder zu prüfen, oder mittels eines Werkzeugs den Betätigungshebel 480 und damit auch den Hebelschalter 110 (und, wie bei dieser Ausführungsform, auch das Übertragungselement 490) in die Betätigungsstellung, in Fig. 6 nach unten, zu drücken oder zu zwingen.

Ein Lösen des Adapteranschlussmoduls 400 von dem Adapter 200 ist daher sehr einfach durch den Benutzer möglich, da er durch einen einzigen Betätigungsvorgang, Einführen eines Werkzeuges in das Gehäuse, wie oben beschrieben, eine Kraft auf ein einzelnes Element, nämlich den Übertragungshebel, ausübt, wodurch erneut ein einzelnes Element des Moduls, nämlich der Hebelschalter 110 in seine Betätigungsstellung gezwungen wird, wodurch sämtliche Pole gleichzeitig und mit Betätigung eines einzelnen Elements "gelöst" werden, so dass dann das Adapteranschlussmodul 400 einfach und ohne Fehlbedienungen und insbesondere ohne Beschädigungen einzelner Kontakte entnommen werden kann.

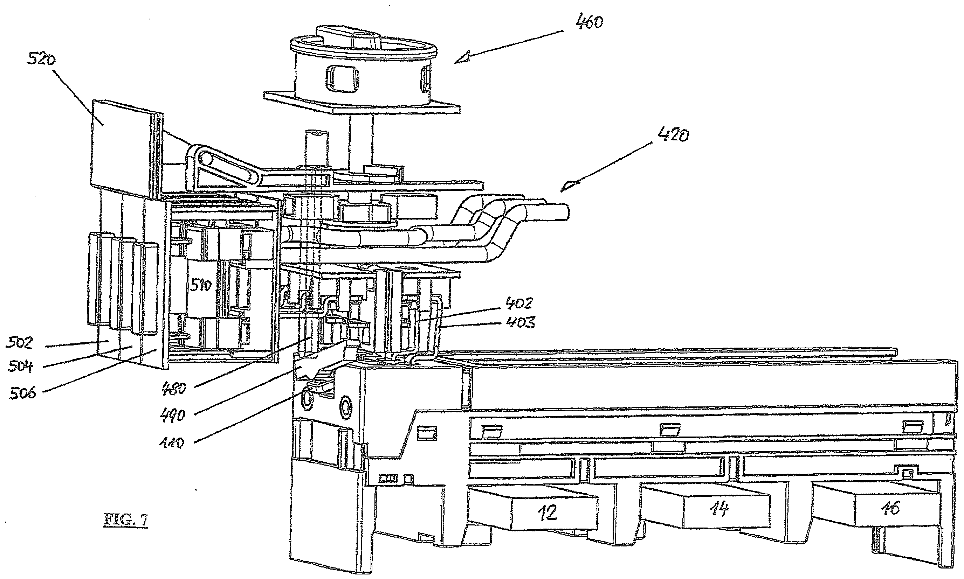

Fig. 7 zeigt perspektivisch einige Elemente eines erfindungsgemäßen Adaptersystems, bei dem der Hauptschalter 460 sich in seiner Ausschaltstellung befindet und das Betätigungselement 480 in seine Betätigungsstellung gedrückt ist, wie in Zusammenhang mit Fig. 6 gezeigt ist.

Der Betätigungshebel 480 ist durch ein Werkzeug (nicht gezeigt) in eine Betätigungsstellung gedrückt worden, in Fig. 7 in Richtung nach unten, so dass auch das Übertragungselement 490 in seine Betätigungsstellung gedrückt wird, wobei das Element 490 drehbar an dem Gehäuse 405 des Adapteranschlussmoduls gelagert ist, so dass es um einen vorbestimmten Winkel gedreht wird.

Das Übertragungselement 490 überträgt die auf den Betätigungshebel 480 ausgeübte Kraft auf den Hebelschalter 110, wie im Zusammenhang mit Fig. 6 erläutert, so dass alle Pole der adapterseitigen Anschlussvorrichtung nicht mehr festgehalten werden und das Anschlussmodul 400 von dem Adapter 200 entnommen werden kann.

Fig. 8 zeigt Bauteile eines Hauptschalters 460, der ein Bedienelement 466, das gegenüber dem Gehäuse 405 des Adapteranschlussmoduls 400 drehbar ist, bei dieser Ausführungsform um einen Winkel von 90°, und ein feststehendes Bauteil 468 umfasst, das nicht gegenüber dem Gehäuse 405 des Adapteranschlussmoduls drehbar ist.

Das drehbare Bedienelement 466 weist eine Öffnung 462 auf, wie oben bereits beschrieben.

In der in Fig. 8 gezeigten Stellung fluchtet diese Öffnung 462 des drehbaren Bedienelements 466 mit einer Öffnung 463 in dem feststehenden Bauteil 468 des Hauptschalters 460, so dass, wie oben bereits beschrieben, ein Werkzeug durch die Öffnung 462 und durch die Öffnung 463 in das Gehäuse des Adapteranschlussmoduls zum Betätigen des Betätigungselements eingeführt werden kann.

Das drehbare Bedienelement 466 des Hauptschalters 460 umfasst eine weitere Öffnung oder ein Fenster 469, durch das, je nach Stellung des Bedienelements, Markierungen auf dem feststehenden Bauteil 468 des Hauptschalters 460 sichtbar sind. Bei der Ausschaltstellung ist hierbei die Markierung "OFF" sichtbar.

Wenn das Bedienelement 466 in seine Einschaltstellung gedreht wird, in Fig. 8 im Uhrzeigersinn um 90°, fluchtet die Öffnung 462 nicht mehr mit der Öffnung 463, so dass kein Werkzeug in das Gehäuse des Adapteranschlusselements eingeführt werden kann.

Die Öffnung oder das Fenster 469 ist dann so positioniert, dass die Markierung "ON" auf dem feststehenden Bauteil 468 des Hauptschalters 460 sichtbar ist.

Fig. 9 zeigt den Hauptschalter 460, mit beiden Elementen 466 und 468, wie oben beschrieben, jedoch in zusammengesetztem Zustand, wobei sich der Hauptschalter 460 in seiner Ausschaltstellung befindet, so dass die Öffnungen 462 und 463 fluchten und ein Werkzeug durch diese Öffnungen 462, 463 eingeführt werden kann, ferner die Öffnung oder das Fenster 469 so positioniert ist, dass die Markierung "OFF" sichtbar ist.

Ferner befinden sich in den Seitenbereichen der Elemente 466 und 468 des Hauptschalters 460 weitere Öffnungen, die miteinander fluchten und in die, wie in Fig. 9 gezeigt, ein Schloss 610 eingesetzt werden kann, so dass der Hauptschalter 460 in seiner Ausschaltstellung verriegelt werden kann und nicht ohne entfernen des Schlosses 610 in seine Einschaltstellung bewegt werden kann.

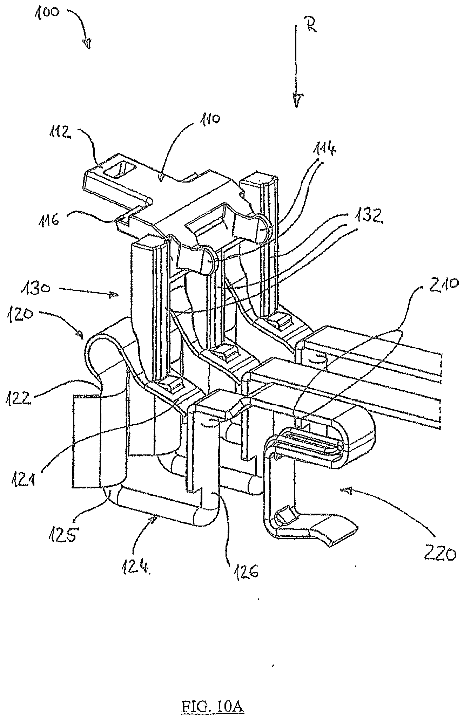

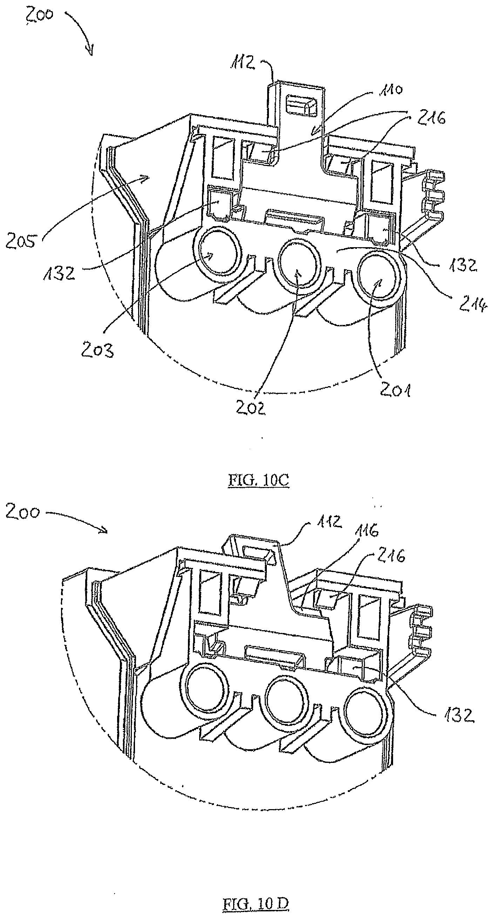

Die Figuren 10A und 10D zeigen eine Kabelanschlusseinrichtung 100, die in einem Adapter 200 einsetzbar ist, und die Figuren 10C und 10D zeigen einen vergrößerten Ausschnitt des Adapters 200 mit eingesetzter Kabelanschlusseinrichtung 100.

Die Kabelanschlusseinrichtung 100 weist einen Hebelschalter 110, eine Verbindungsstruktur 130 und in diesem Ausführungsbeispiel drei Federklemmen als Federklemmenstruktur 120 auf. Der Hebelschalter 110 weist einen Hebelarm 112 und gegenüberliegend eine Abstützstruktur oder einen Abstützabschnitt 114 auf, wobei zwischen dem Hebelarm 112 und der Abstützstruktur 114 ein Hebelpunkt P (der in der Fig. verdeckt ist) die Verbindungsstruktur 130 kontaktiert. Der Abstützabschnitt 114 dient beispielsweise als Drehpunkt für den Hebelarm 112, so dass der Abstützabschnitt 114 sich beim Betätigen des Hebelschalters 110 gegenüber einem Gehäuse dreht, nicht aber transversal verschoben wird.

Die Verbindungsstruktur 130, die beispielsweise einteilig ausgebildet ist, weist beispielsweise drei Abstützstäbe 132 (stabförmige Elemente oder Stößel) auf, die sich in einer Einführrichtung R (Einsetz- oder Einschubrichtung) der adapterseitigen Anschlussvorrichtung erstrecken und an einem dem Hebelpunkt P gegenüberliegenden Ende jeweils eine der drei Federklemmen 120 kontaktieren. Die jeweils eine Federklemme 120 ist jeweils mit einem U-förmigen Verbindungsteil (U-geformten Kontaktverbindung) 124 verbunden. Das U-förmige Verbindungsteil 124 weist zwei gegenüberliegende Schenkel 125, 126 auf, wovon an einem Schenkel 125 die Federklemme 120 angeordnet ist und an dem anderen Schenkel 126 jeweils ein Ende einer Kontaktverbindung 210 für eine Sammelschiene befestigt ist. Der Hebelschalter 110 und/oder die Verbindungsstruktur 130 weisen vorzugsweise ein elektrisch isolierendes Material auf.

Der Hebelschalter 110 gemäß einem Ausführungsbeispiele der vorliegenden Erfindung weist ferner eine stufenförmige Vertiefung 116 auf, die einen oberen Anschlag für eine Bewegung entgegen der Einschubrichtung R bereitstellt, so dass der Hebelschalter 110 durch die Federkraft unter Spannung in dem Gehäuse (siehe Fig. 10C) gehalten werden kann.

Der gezeigte Hebelschalter 110 ist daher ausgebildet, um eine Hebelwirkung auszunutzen, die entlang eines Hebelarms entsteht, der sich an einem Stützpunkt abstützt (in der Fig. 10A nicht gezeigt) und eine Hebelkraft an dem Hebelpunkt erzeugt, wenn der Nutzer am Ende des Hebelarms 112 eine Kraft aufbringt. Wie erläutert ist es daher mit der vorliegenden Erfindung möglich, dass alle Kontakte zwischen dem Anschlusskabel und den Kontaktverbindungen 210 gleichzeitig (oder in kurzen Abständen hintereinander), jedoch in einem Arbeitsschritt, herstellbar und lösbar sind, so dass keine separate Kontaktierung der einzelnen Leitungen bzw. Pole erforderlich ist. Der Nutzer kann somit durch ein einmaliges Betätigen des Hebelschalters 110 (wie oben erläutert über den Betätigungshebel und ggf. das Übertragungselement) alle Leitungen der adapterseitigen Anschlussvorrichtung mit den entsprechenden Kontaktverbindungen 210 in dem Adapter kontaktieren und ebenso in einem einzigen Arbeitsschritt alle Leitungen der adapterseitigen Anschlussvorrichtung von den Kontaktverbindungen 210 und somit von den Sammelschienen trennen. Dazu sind keine mehrfachen Arbeitsschritte erforderlich, sondern nur ein einmaliges Betätigen des Betätigungshebels 480 und damit des Hebelschalters 110.

Jede der drei Federklemmen 120 kann als Blattfeder mit einem Federarm 121 ausgebildet sein und stellt eine Federkraft bereit, die den Federarm 121 ganz oder teilweise hin zu dem anderen Schenkel 126 des U-förmigen Verbindungsteils 124 drückt, um so einen Kontakt bei einem Einschieben der adapterseitigen Anschlussvorrichtung zwischen der jeweiligen Leitung des Anschlusskabels und der jeweiligen Kontaktverbindung 210 und der Stromschiene herzustellen. Diese drei Federklemmen 120 werden durch ein einmaliges Betätigen des Betätigungshebels 480 und damit des Hebelschalters 110 gleichzeitig geöffnet (z.B. werden alle Federarme 121 über die stabförmigen Elemente 132 gleichzeitig in die Einschubrichtung R gedrückt).

Bei dem Ausführungsbeispiel, wie es in der Fig. 10A gezeigt ist, weist die Kabelanschlusseinrichtung 100 insgesamt drei Kontaktverbindungen 210 zu drei Stromschienen auf, die beispielsweise für einen dreiphasigen Stromanschluss geeignet sind. Die Stromschienen sind an einer Halterung 220 an einer Unterseite (in Einschubrichtung R) kontaktierbar und sind in der Fig. 10A nicht gezeigt. Außerdem können die Blattfedern auch zwei gegenüberliegende Blätter 121, 122 aufweisen, die entgegen der Federkraft zusammengedrückt werden können. Das Zusammendrücken kann beispielsweise durch das Ausüben einer Kraft auf den Hebelarm 112 des Hebelschalters 110 bewirkt werden, wobei die Kraft über die Verbindungsstruktur 130 (z.B. über die beispielhaften stabförmigen Elemente 132) weiter auf den Federarm 121 weitergeleitet wird, um dort ein Verbiegen des Federarms 121 zu bewirken, wenn beispielsweise der Nutzer den Betätigungshebel 480 und damit den Hebelschalter 110 betätigt.

Die Federkraft der Federklemmen 120 ist bspw. ausreichend stark gewählt, so dass ein selbständiges Lösen des Kontaktes des mehrpoligen Anschlusskabels zwischen dem Federarm 121 und dem anderen Schenkel 126 des U-förmigen Verbindungsteils 124 verhindert wird und ein sicherer Kontakt zwischen der adapterseitigen Anschlussvorrichtung und dem Sammelschienen-Adapter erreicht wird. Vorteilhafterweise widersteht der Kontakt einer Zugkraft, die auf dem Anschlusskabel entgegengesetzt zu der Einschubrichtung R einwirkt, wobei die tolerierbare Zugkraft beispielsweise einer Kraft entspricht, die ein Nutzer bei einem unbeabsichtigten Herausziehen aufbringt.

Dies kann beispielsweise dadurch erreicht werden, dass auf der Oberfläche des Federarmes 121 eine Struktur ausgebildet ist, die die Reibung zwischen dem Federarm 121 und der jeweiligen Leitung beziehungsweise des jeweiligen Pols der adapterseitigen Anschlussvorrichtung erhöht. Optional ist es ebenfalls möglich, dass das Kabel durch den Federarm 121 in dem U-förmigen Verbindungsstück 124, welches die Verbindung zur Kontaktverbindung 210 herstellt, eingeklemmt wird, so dass es entgegen einer Einschubrichtung R nicht bewegbar ist oder nur bewegbar ist, wenn der Federarm 121 weggedrückt wird. Ein solches Einklemmen bewirkt eine Arretierung. Beim Herausnehmen der Leitung beziehungsweise des Pols aus dem Adapter ist es in diesem Ausführungsbeispiel zunächst erforderlich, dass der Federarm 121 in die Einschubrichtung R gedrückt wird, um so die jeweilige Leitung zu lösen.

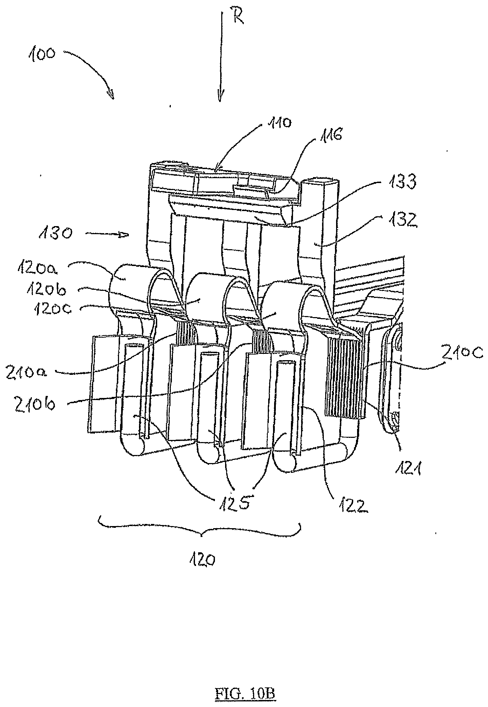

Die Figur 10B zeigt die Kabelanschlusseinrichtung 100 der Figur 10A von einer gegenüberliegenden Seite, sodass die Federklemmenstruktur 120 mit insgesamt drei Federklemmen 120a, 120b, 120c sichtbar ist, die durch die stabförmigen Elemente 132 kontaktiert werden. Die stabförmigen Elemente 132 sind bei diesem Ausführungsbeispiel über eine Brücke 133 miteinander verbunden, sodass bei einer Betätigung des Hebelschalters 110 beziehungsweise des Hebelarms 112 die Brücke 133 nach unten hin zu den Federklemmen 120 gedrückt wird (d.h. in die Einsetzrichtung R). In betätigtem Zustand des Hebelschalters 110 werden somit die drei gezeigten Federklemmen 120 von einem entsprechenden Kontakt 210a, 210b, 210c der Kontaktverbindung 210 getrennt und erlauben somit das Einführen der mehrpoligen adapterseitigen Anschlussvorrichtung in einem einzigen Arbeitsschritt.

Die Fig. 10C zeigt einen vergrößerten Ausschnitt eines Adapters 200, wobei die Kabelanschlusseinrichtung 100 in einem nur teilweise sichtbaren Gehäuse 205 des Adapters 200 eingesetzt ist. Das Gehäuse 205 umfasst drei Öffnungen: eine erste Öffnung 201, eine zweite Öffnung 202 und eine dritte Öffnung 203, in die eine dreipolige adapterseitige Anschlussvorrichtung einsetzbar ist. Das Gehäuse 205 kann beispielsweise ein Oberdeck und ein Unterdeck aufweisen, wobei in der Fig. 10C das Oberdeck abgenommen wurde und lediglich das Unterdeck sichtbar ist.

Das Gehäuse 205 weist zumindest einen Vorsprung 216 (oder Haken) an einer Stirnfläche des Gehäuses 205 auf, um damit einen Anschlag für den Hebelschalter 110 zu bieten. Darüber hinaus ist der Hebelschalter 110 mit der Stützstruktur 114, die in der Figur 10C nicht sichtbar ist, durch ein Stützelement 214 (oder Stützstruktur) abgestützt, sodass der Hebelarm 110 aufgrund der Kombination des Vorsprungs 216 und des Stützelements 214 in dem Gehäuse 205 zurück gehalten wird und sich lediglich in die Einschubrichtung R bewegen bzw. drehen kann. Der Vorsprung 216 greift dabei in die stufenförmige Vertiefung 116 des Hebelschalters ein und blockiert eine vertikale Richtung (gegen die Federspannung).

Das Stützelement 214 und der Vorsprung 216 bilden somit Haltemittel, die einen Anschlag und einen Drehpunkt für den Abstützabschnitt 114 definieren, sodass der Hebelarm 112 entgegen der Federkraft durch den Vorsprung 216 und durch den Stützabschnitt 214 im Gehäuse 205 gehalten wird, wenn beispielsweise das Oberdeck abgenommen wird (wie es in der Fig. 10C gezeigt ist). Der Hebelschalter 110 nimmt daher beim Lösen (oder in nicht-gedrückten Zustand) durch die Federkraft der Federklemmenstruktur 120 eine Nullstellung an, bei der die adapterseitige Anschlussvorrichtung mit den zumindest zwei Polen in den Öffnungen 201, 202, 203 gehalten wird.

Die Fig. 10D zeigt den gleichen Teilabschnitt des Adapters 200, wie er in der Figur 10C zu sehen ist, wobei in der Fig. 10D der Hebelschalter 110 betätigt wurde, sodass der Hebelarm 112 sich in der Ansicht der Fig. 10D nach unten (in die Einschubrichtung R) bewegt hat und die stufenförmige Vertiefung 116 am Hebelschalter 110 sich von dem Vorsprung 216 gelöst hat und gleichzeitig die Verbindungsstruktur 130 mit den stabförmigen Elementen 132 sich entlang der Bewegungsrichtung des Hebelarms 112 in die Einschubrichtung R bewegt haben. Bei dieser Hebelbewegung dient das Stützelement 214 als eine Stütze für die Abstützstruktur 114, sodass der Hebelarm 112 einen Hebel bildet und an dem Hebelpunkt P die Hebelkraft die Verbindungsstruktur 130 nach unten bewegt.

Die Figs. 11 bis 14 betreffen eine weitere Ausführungsform, wobei sich diese Ausführungsform insbesondere auf einen zweiten Aspekt der vorliegenden Erfindung bezieht. Diese Ausführungsform ist sehr ähnlich zu der in den Figuren 1 bis 10 beschriebenen Ausführungsformen, so dass zur Vermeidung von Wiederholungen auf die obige Beschreibung verwiesen wird, ferner sind ähnliche oder identische Elemente mit den gleichen Bezugszeichen versehen.

Fig. 11 zeigt in einer perspektivischen Darstellung einige wichtige Elemente gemäß einer Ausführungsform eines erfindungsgemäßen Adapteranschlussmoduls 400, das mit einem Adapter (200, siehe Figs. 1 bis 10) für Sammelschienen verbindbar ist, wie es auch oben beschrieben worden ist.

Im Unterschied zu der in den Figs. 1 bis 10 gezeigten Ausführungformen umfasst der Hauptschalter 460 zusätzlich eine Betätigungskurve 464, die bei dieser Ausführungsform direkt an dem Hauptschalter 440 angebracht ist, wobei sie alternativ auch einstückig mit einem Bauteil des Hauptschalters 440 oder mit dem Hauptschalter 460 selbst ausgebildet sein kann. Die Betätigungskurve kann allerdings auch ein getrenntes Bauteil darstellen, das mit dem Hauptschalter oder einem Bauteil des Hauptschalters direkt oder indirekt gekoppelt ist, so dass die Betätigungskurve in eine Montagestellung gebracht wird, wenn sich der Hauptschalter in seiner Montagestellung befindet.

In Fig. 11 ist ferner eine Sperrvorrichtung 800 mit einer Sperrfeder 802 gezeigt. Wie oben erläutert, sind bei dieser Ausführungsform die Sperrvorrichtung 800 und die Sperrfeder 802 so ausgebildet, dass die Sperrfeder 802 die Sperrvorrichtung 800 in ihrer Sperrstellung vorspannt, wobei die Sperrvorrichtung 800 in ihrer Sperrstellung verhindert, dass der Hauptschalter 460 von seiner Ausschaltstellung in seine Montagestellung bewegt werden kann.

Fig. 11 zeigt das Adapteranschlussmodul, wobei sich der Hauptschalter 460 in seiner Einschaltstellung befindet. Wie deutlich in Fig. 11 ersichtlich, wirkt die Betätigungskurve 464 daher nicht auf den Betätigungshebel 480.

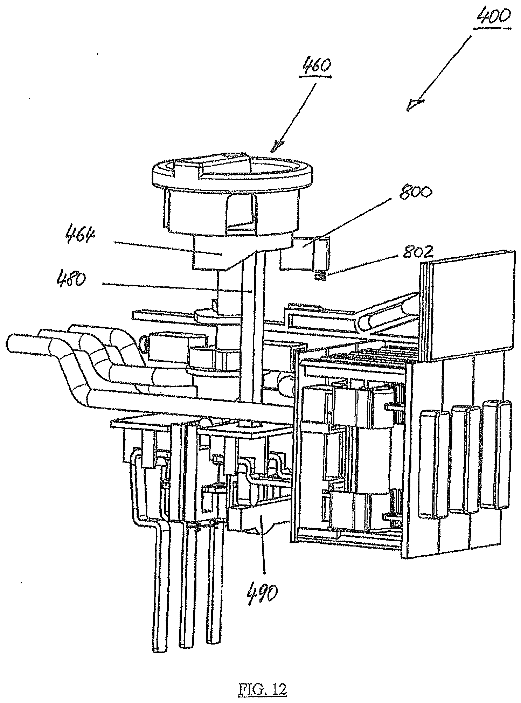

In Fig. 12 ist der Hauptschalter 460 in seine Ausschaltstellung bewegt worden, wobei sich der Betätigungshebel 480 in einem Bereich der Betätigungskurve 464 befindet, der so ausgebildet ist, dass der Betätigungshebel 480 nicht oder noch nicht in seine Betätigungsstellung gezwungen wird.

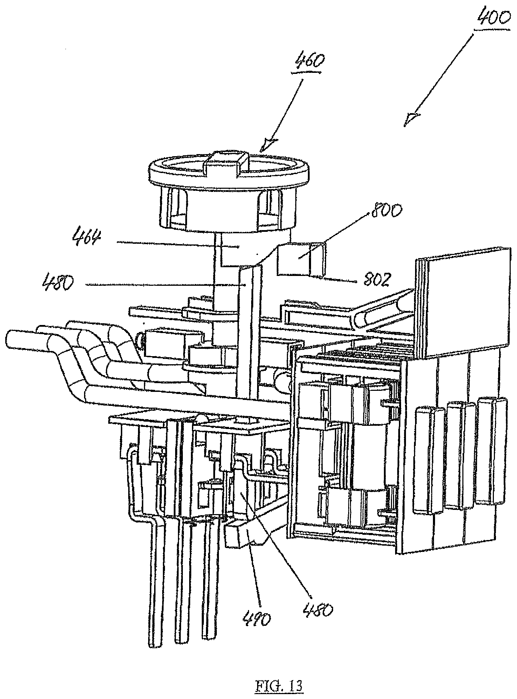

Erst bei Bewegen des Hauptschalters 460 in seine Montagestellung, wie es in Fig. 13 gezeigt wird, befindet sich der Betätigungshebel 480 in einem Bereich der Betätigungskurve 464, der so ausgebildet ist, dass der Betätigungshebel 480 in seine Montagestellung gezwungen wird.

Hierdurch drückt der Betätigungshebel 480 auf das Übertragungselement 490, das, wie auch im Zusammenhang mit den Figs. 1 bis 10 beschrieben, so auf den Hebelschalter (110, siehe beispielsweise Fig. 7) wirkt, dass dieser nach unten gedrückt wird, wenn das Adapteranschlussmodul 400 auf dem Adapter für Sammelschienen angeordnet ist.

Wie ferner in Fig. 12 zu sehen ist, verhindert die Sperrvorrichtung 800, wenn sie sich in ihrer Sperrstellung befindet, wie es in Fig. 12 gezeigt ist, ein weiteres Verdrehen des Hauptschalters 460, da ein Element der Betätigungskurve 464 gegen die Sperrvorrichtung 800 stößt.

Erst wenn die Sperrvorrichtung 800 entgegen der Vorspannung der Federvorrichtung 802 in ihre Montagestellung gedrückt wird, in Fig. 12 nach unten, kann der Hauptschalter 460 in seine Montagestellung bewegt werden, wie es in Fig. 13 gezeigt ist.

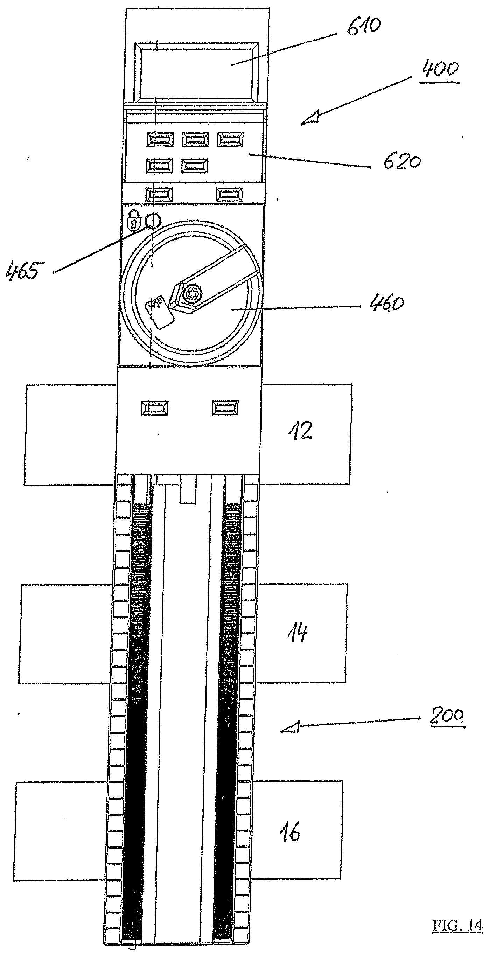

Fig. 14 zeigt eine Draufsicht auf eine Ausführungsform eines Adaptersystems gemäß dem zweiten Aspekt der Erfindung, ansonsten sehr vergleichbar mit Fig. 2, wobei der Hauptschalter in Fig. 14 in seiner Montagestellung gezeigt ist.

In Fig. 14 sieht man auch sehr deutlich eine Öffnung 465, in die ein Werkzeug eingeführt werden kann, so dass die Sperrvorrichtung von ihrer Sperrstellung in ihre Montagestellung gezwungen werden kann, wie oben beschrieben.

Im Hinblick auf die weiteren Merkmale der in den Figs. 11 bis 14 gezeigten Ausführungsform wird auf die Beschreibung zu den Figs. 1 bis 10 verwiesen, um Wiederholungen zu vermeiden.

## Patentansprüche

1. Adaptersystem für Sammelschienen, das einen Adapter (200) für Sammelschienen und ein Adapteranschlussmodul (400) aufweist, die zum Bereitstellen einer Betriebsposition des Adaptersystems (200) miteinander verbindbar sind,
wobei der Adapter für Sammelschienen folgendes aufweist:
- mindestens zwei Kontaktverbindungen (210) zum Anschließen des Adapters (200) an ein Sammelschienensystem mit mindestens zwei Sammelschienen (12, 14, 16),
- ein Gehäuse (205), das mindestens zwei Öffnungen (201, 202, 203) zur Aufnahme jeweils eines Pols einer ersten mehrpoligen Anschlussvorrichtung des Adapteranschlussmoduls (400) aufweist,
- eine Kabelanschlusseinrichtung (100), die in dem Gehäuse (205) des Adapters (200) angeordnet ist und die eine Federklemmenstruktur (120) und einen Hebelschalter (110) aufweist, die so ausgebildet sind, dass die Federklemmenstruktur (120) eine Federkraft ausübt, die zum einen den Hebelschalter (110) in einer Einschaltstellung vorspannt und zum anderen eine Kraft auf alle eingesetzten Pole der ersten Anschlussvorrichtung ausübt, so dass diese nicht aus der Kabelanschlusseinrichtung (100) entnehmbar sind, wenn sich der Hebelschalter (110) in seiner Einschaltstellung befindet, wobei der Hebelschalter (110) entgegen der von der Federklemmenstruktur (120) ausgeübten Federkraft von seiner Einschaltstellung in eine Betätigungsstellung bewegbar ist, so dass in der Betätigungsstellung des Hebelschalters (110) alle eingesetzten Pole der ersten Anschlussvorrichtung aus der Kabelanschlusseinrichtung (100) entnehmbar sind,
wobei das Adapteranschlussmodul (400) folgendes aufweist:
- ein Gehäuse (405), aus dem mindestens zwei Pole (401, 402, 403) der ersten Anschlussvorrichtung (410) zum Einführen in die mindestens zwei Öffnungen (201, 202, 203) des Gehäuses (205) des Adapters (200) für Sammelschienen herausragen und das eine zweite, mindestens zweipolige Anschlussvorrichtung (420) zum Anschluss eines elektrischen Verbrauchers aufweist, wobei die erste Anschlussvorrichtung (410) über eine unterbrechbare Brückenschaltung (440) mit der zweiten Anschlussvorrichtung (420) verbunden ist,
- einen Hauptschalter (460), der zwischen einer Einschaltstellung und einer Ausschaltstellung hin- und herschaltbar ist,
- einen Betätigungshebel (480) zum Betätigen des Hebelschalters (110) des Adapters (200) für Sammelschienen, wobei der Betätigungshebel zwischen einer Betriebsstellung und einer Betätigungsstellung bewegbar ist,
wobei sich die Brückenschaltung (440) in ihrer Einschaltstellung befindet, wenn sich der Hauptschalter (460) in der Einschaltstellung befindet, und wobei sich die Brückenschaltung (440) in ihrer Unterbrecherstellung befindet, wenn sich der Hauptschalter (460) in seiner Ausschaltstellung befindet, und
wobei der Hauptschalter (460) an einem seiner Bauteile eine Öffnung (462) aufweist, die so angeordnet und ausgebildet ist, dass der Betätigungshebel (480) des Adapteranschlussmoduls (400) mittels eines Werkzeuges, das durch diese Öffnung des Hauptschalters (460) in das Gehäuse (405) des Adapteranschlussmoduls (400) einführbar ist, in seine Betätigungsstellung gezwungen werden kann, wenn sich der Hauptschalter (460) in seiner Ausschaltstellung befindet, wobei diese Öffnung (462) des Hauptschalters (460) durch ein Element des Adapteranschlussmoduls (400) verschlossen ist, wenn sich der Hauptschalter (460) in seiner Einschaltstellung befindet.

2. Adaptersystem für Sammelschienen, das einen Adapter (200) für Sammelschienen und ein Adapteranschlussmodul (400) aufweist, die zum Bereitstellen einer Betriebsposition des Adaptersystems (200) miteinander verbindbar sind,
wobei der Adapter für Sammelschienen folgendes aufweist:
- mindestens zwei Kontaktverbindungen (210) zum Anschließen des Adapters (200) an ein Sammelschienensystem mit mindestens zwei Sammelschienen (12, 14, 16),
- ein Gehäuse (205), das mindestens zwei Öffnungen (201, 202, 203) zur Aufnahme jeweils eines Pols einer ersten, mehrpoligen Anschlussvorrichtung des Adapteranschlussmoduls (400) aufweist,
- eine Kabelanschlusseinrichtung (100), die in dem Gehäuse (205) des Adapters (200) angeordnet ist und die eine Federklemmenstruktur (120) und einen Hebelschalter (110) aufweist, die so ausgebildet sind, dass die Federklemmenstruktur (120) eine Federkraft ausübt, die zum einen den Hebelschalter (110) in einer Einschaltstellung vorspannt und zum anderen eine Kraft auf alle eingesetzten Pole der ersten Anschlussvorrichtung ausübt, so dass diese nicht aus der Kabelanschlusseinrichtung (100) entnehmbar sind, wenn sich der Hebelschalter (110) in seiner Einschaltstellung befindet, wobei der Hebelschalter (110) entgegen der von der Federklemmenstruktur (120) ausgeübten Federkraft von seiner Einschaltstellung in eine Betätigungsstellung bewegbar ist, so dass in der Betätigungsstellung des Hebelschalters (110) alle eingesetzten Pole der ersten Anschlussvorrichtung aus der Kabelanschlusseinrichtung (100) entnehmbar sind,
wobei das Adapteranschlussmodul (400) folgendes aufweist:
- ein Gehäuse (405), aus dem mindestens zwei Pole (401, 402, 403) der ersten Anschlussvorrichtung (410) zum Einführen in die mindestens zwei Öffnungen (201, 202, 203) des Gehäuses (205) des Adapters (200) für Sammelschienen herausragen und das eine zweite, mindestens zweipolige Anschlussvorrichtung (420) zum Anschluss eines elektrischen Verbrauchers aufweist, wobei die erste Anschlussvorrichtung (410) über eine unterbrechbare Brückenschaltung (440) mit der zweiten Anschlussvorrichtung (420) verbunden ist,
- einen Hauptschalter (460), der zwischen einer Einschaltstellung und einer Ausschaltstellung hin- und herschaltbar ist,
- einen Betätigungshebel (480) zum Betätigen des Hebelschalters (110) des Adapters (200) für Sammelschienen, wobei der Betätigungshebel zwischen einer Betriebsstellung und einer Betätigungsstellung bewegbar ist,
wobei sich die Brückenschaltung (440) in ihrer Einschaltstellung befindet, wenn sich der Hauptschalter (460) in der Einschaltstellung befindet, und wobei sich die Brückenschaltung (440) in ihrer Unterbrecherstellung befindet, wenn sich der Hauptschalter (460) in seiner Ausschaltstellung befindet, und
wobei der Hauptschalter (460) ferner so ausgebildet ist, dass er auch eine Montagestellung aufweist und zwischen der Ausschaltstellung und der Montagestellung hin- und herschaltbar ist,
wobei das Adapteranschlussmodul (400) und der Hauptschalter (460) so angeordnet und ausgebildet sind, dass der Betätigungshebel (480) des Adapteranschlussmoduls (400) direkt oder indirekt in seine Betätigungsstellung gezwungen wird, wenn sich der Hauptschalter (460) in seiner Montagestellung befindet.

3. Adaptersystem nach Anspruch 1 oder 2, wobei der Hauptschalter (460) oder ein Bauteil (466) des Hauptschalters (460) zwischen seiner Einschaltstellung und seiner Ausschaltstellung um einen vorbestimmten Winkel drehbar ist.

4. Adaptersystem nach Anspruch 2 oder Anspruch 3 unter Rückbezug auf Anspruch 2, wobei der Hauptschalter (460) oder ein Bauteil (466) des Hauptschalters (460) zwischen seiner Ausschaltstellung und seiner Montagestellung um einen vorbestimmten Winkel drehbar ist.

5. Adaptersystem nach einem der vorhergehenden Ansprüche, wobei der Betätigungshebel (480) des Adapteranschlussmoduls (400) zwischen seiner Betätigungsstellung und seiner Betriebsstellung in seiner Längsrichtung um eine vorbestimmte Strecke bewegbar ist.

6. Adaptersystem nach einem der vorhergehenden Ansprüche, wobei das Adapteranschlussmodul (400) pro Pol eine Sicherungsaufnahme zur Aufnahme von Sicherungen (510) aufweist, wobei die Sicherungsaufnahmen (502, 504, 506) zwischen einer Betriebsposition und einer Entnahmeposition, in der eine Sicherung (510) vom Nutzer aus der Sicherungsaufnahme (502, 504, 506) entnehmbar ist, bewegbar sind.

7. Adaptersystem nach Anspruch 6, wobei das Adapteranschlussmodul (400) ferner eine Verriegelungsvorrichtung (520) für die Sicherungsaufnahmen (502, 504, 506) aufweist, die so mit dem Hauptschalter (460) gekoppelt ist, dass die Verriegelungsvorrichtung (520) eine Bewegung jeder Sicherungsaufnahme (502, 504, 506) aus ihrer Betriebsposition heraus in Richtung der Entnahmeposition verhindert, wenn sich der Hauptschalter (460) in seiner Einschaltstellung befindet.

8. Adaptersystem nach Anspruch 7, wobei der Hauptschalter (460) und die Verriegelungsvorrichtung (520) direkt oder indirekt so gekoppelt sind, dass eine Drehbewegung des Hauptschalters (460) in eine lineare Bewegung der Verriegelungsvorrichtung (520) transformiert wird.

9. Adaptersystem nach einem der vorhergehenden Ansprüche, wobei ein bewegbares Bedienelement (466) des Hauptschalters (460), das zwischen der Einschaltstellung und der Ausschaltstellung bewegt wird, Öffnungen aufweist, die in der Einschaltstellung und/oder in der Ausschaltstellung mit korrespondierenden Öffnungen weiterer Elemente (468) des Hauptschalters (460) oder des Adapteranschlussmoduls (400) so fluchten, dass der Hauptschalter (460) mittels einer Schlossvorrichtung (610), die durch die Öffnungen führbar ist, in der Einschaltstellung und/oder in der Ausschaltstellung verriegelbar ist.

10. Adaptersystem nach einem der vorhergehenden Ansprüche, wobei das Adapteranschlussmodul (400) ferner ein Übertragungselement (490) umfasst, das an einem Teil des Adapteranschlussmoduls (400), bevorzugt drehbar, befestigt ist, wobei der Betätigungshebel (480) und das Übertragungselement (490) so angeordnet und ausgebildet sind, dass der Betätigungshebel (480) das Übertragungselement (490) in eine Betätigungsstellung zwingt, wenn sich das Betätigungselement (480) in seiner Betätigungsstellung befindet, so dass das Betätigungselement (480) den Hebelschalter (110) des Adapters (200) für Sammelschienen über das Übertragungselement (490) indirekt in seine Betätigungsstellung zwingt.

11. Adaptersystem nach Anspruch 10, wobei das Übertragungselement (490) so angeordnet und ausgebildet ist, dass es maximal um einen vorbestimmten Winkel drehbar ist.

12. Adaptersystem nach einem der vorhergehenden Ansprüche, wobei das Adapteranschlussmodul (400) ferner mindestens eine Messeinrichtung zum Messen eines Betriebsparameters des Adaptersystems und/oder einen Mikroprozessor und/oder ein elektronisches Netzteil aufweist.

13. Adaptersystem nach einem der vorhergehenden Ansprüche, wobei das Adapteranschlussmodul (400) ferner eine Anzeigevorrichtung (610) für den Nutzer und/oder ein Bedienfeld (620) für den Nutzer aufweist.

14. Adaptersystem nach Anspruch 2 oder einem der Ansprüche 3 bis 13 unter Rückbezug auf Anspruch 2, wobei der Hauptschalter (460) oder ein Bauteil des Hauptschalters (460) eine Betätigungskurve (464) umfasst, die so ausgebildet ist, dass sie den Betätigungshebel (480) des Adapteranschlussmoduls (400) in seine Betätigungsstellung zwingt, wenn sich der Hauptschalter (460) in seiner Montagestellung befindet.

15. Adaptersystem nach Anspruch 2 oder 14 oder nach einem der Ansprüche 3 bis 13 unter Rückbezug auf Anspruch 2, wobei das Adapteranschlussmodul (400) ferner eine Sperrvorrichtung (800) aufweist, die von einer Sperrstellung in eine Montagestellung bewegbar ist, wobei das Adapteranschlussmodul (400), der Hauptschalter (460) und die Sperrvorrichtung (800) so ausgebildet sind, dass der Hauptschalter nicht von seiner Ausschaltstellung in seine Montagestellung bewegbar ist, wenn sich die Sperrvorrichtung (800) in ihrer Sperrstellung befindet.

16. Adaptersystem nach Anspruch 15, wobei die Sperrvorrichtung (800) eine Federvorrichtung aufweist, die die Sperrvorrichtung (800) in ihre Sperrstellung vorspannt.

17. Adaptersystem nach Anspruch 15 oder 16, wobei der Hauptschalter (460) an einem seiner Bauteile und/oder das Adapteranschlussmodul (400) an einem seiner Bauteile eine Öffnung (465) aufweist, die so angeordnet und ausgebildet ist, dass die Sperrvorrichtung (800) mittels eines Werkzeuges, das durch diese Öffnung (465) einführbar ist, in seine Montagestellung gezwungen werden kann, wenn sich der Hauptschalter (460) in seiner Ausschaltstellung befindet.

## Claims

1. An adapter system for busbars comprising an adapter (200) for busbars and an adapter connection module (400), which may be connected with one another to provide an operating position of the adapter system (200).
wherein the adapter for busbars has the following:
- at least two contact connections (210) for connecting the adapter (200) to a busbar system with at least two busbars (12, 14, 16),
- a housing (205), which has at least two openings (201, 202, 203) for accommodating in each case one pole of a first multipolar connecting device of the adapter connection module (400),
- a cable connecting device (100), disposed in the housing (205) of the adapter (200) and having a spring clamp structure (120) and a lever switch (110), which are designed, so that the spring clamp structure (120) exerts a spring force, which, on the one hand, pretensions the lever switch (110) in an ON position and, on the other, exerts a force on all inserted poles of the first connecting device, so that these cannot be removed from the cable connecting device (100) when the lever switch (110) is in the ON position, wherein the lever switch (110) can be moved from its ON position into an actuation position against the force exerted by the spring clamp structure (120), so that, in the actuating position of the lever switch (110), all the inserted poles of the first connecting device can be removed from the cable connecting device (100),
wherein the adapter connecting module (400) has the following:
- a housing (405), from which at least two poles (401, 402, 403) of the first connecting device (410) protrude for insertion into the at least two openings (201, 202, 203) of the housing (205) of the adapter (200) for busbars
and which has a second, at least bipolar connecting device (420) for connecting an electrical load, wherein the first connecting device (410) is connected to the second connecting device (420) via an interruptible bridge circuit (440),
- a main switch (460), which can be switched back and forth between an ON position and an OFF position,
- an actuating lever (480) for actuating the lever switch (110) of the adapter (200) for busbars, the operating lever being movable between an operating position and an actuation position,
the bridge circuit (440) being in its ON position when the main switch (460) is in the ON position, and wherein the bridge circuit (440) is in its disconnected position when the main switch (460) is in its OFF position and
wherein the main switch (460), on one of its components, has an opening (462), which is disposed and designed so that the actuating lever (480) of the adapter connecting module (400) can be forced into its actuating position by means of a tool, which can be introduced through this opening in the main switch (460) in the housing (405) of the adapter connecting module (400), when the main switch (460) is in its switched-off position, this opening (462) of the main switch (460) being closed by an element of the adapter connecting module (400), when the main switch (460) is in its switched-on position.

2. An adapter system for busbars having an adapter (200) for busbars and an adapter connecting module (400), which can be connected with one another to provide an operating position of the adapter system (200),
wherein the adapter for busbars has the following:
- at least two contact connections (210) for connecting the adapter (200) to a busbar system with at least two busbars (12, 14, 16),
- a housing (205), which has at least two openings (201, 202, 203) for accommodating one pole each of a first multipolar connecting device of the adapter connecting module (400),
- a cable connecting means (100), which is disposed in the housing (205) of the adapter (200) and a spring clamp structure (120) and a lever switch (110), which are designed, on the one hand, so that the spring clamp structure (120) pretensions a switch position and, on the other hand exerts a force on all the inserted poles of the first connecting device, so that this cannot be removed from the cable connection device (100), when the lever switch (110) is in its switched-on position, the lever switch (110) being movable from its switched-on position into an actuating position in opposition to the force exerted by the spring clamping structure (120), so that, in the actuating position of the lever switch (110), all inserted poles of the first connecting device can be removed from the cable connecting device (100),
wherein the adapter connecting module (400) has the following:
- a housing (405), from which at least two poles (401, 402, 403) of the first connecting device (410) protrude for insertion into the at least two openings (201, 202, 203) of the housing (205) of the adapter (200) for busbars, and which has a second, at least bipolar connecting device (420) for connecting an electric consumer, wherein the first connecting device (410) is connected to the second connecting device (420) over an interruptible bridge circuit (440),
- a main switch (460), which can be switched back and forth between an ON position and an OFF position,
- an actuating lever (480) for actuating the lever switch (110) of the adapter (200) for busbars, the operating lever being movable between an operating position and an actuation position,
the bridge circuit (440) being in its ON position when the main switch (460) is in the ON position and wherein the bridge circuit (440) is in its disconnected position when the main switch (460) is in its OFF position and
wherein the main switch (460) furthermore is designed, so that it also has an assembly position and can be switched back and forth between the OFF position and the assembly position,
wherein the adapter connecting module (400) and the main switch (460) are disposed and designed, so that the actuating lever (480) of the adapter connecting module (400) is forced directly or indirectly into its actuation position when the main switch (460) is located in its assembly position.

3. An adapter system according to claims 1 or 2, wherein the main switch (460) or a component
(466) of the main switch (460) can be rotated through a predetermined angle between its switched-on position and its switched-off position.

4. The adapter system of claims 2 or 3 with reference to claim 2, wherein the main switch (460) or a component (466) of the main switch (460) is rotatable by a predetermined angle between its off position and its mounting position.

5. The adapter system according to one of the preceding claims, wherein the actuating lever (480) of the adapter connecting module (400) can be moved in its longitudinal direction by a predetermined distance between its actuation position and its operating position.

6. The adapter system according to one of the preceding claims, wherein the adapter connecting module (400) has one fuse receptacle per pole for receiving fuses (510), the fuse receptacles (502, 504, 506) being movable between an operating position and a removal position, in which a fuse (510) can be removed by the user from the fuse box (502, 504, 506).

7. The adapter system according to claim 6, wherein the adapter connecting module (400) furthermore has a locking device (520) for the fuse boxes (502, 504, 506), which is coupled with the main switch (460), so that the locking device (520) prevents movement of any fuse box (502, 504, 506) from its operating position in the redirection of the removal position, when the main switch (460) is in its ON position.

8. The adapter system according to claim 7, wherein the main switch (460) and the locking device (520) are coupled directly or indirectly, so that a rotational movement of the main switch (460) is transformed into a linear movement of the locking device (520).

9. The adapter system according to one of the preceding claims, wherein a movable control element (466) of the main switch (460), which is moved between the ON position and the OFF position, has openings, which, in the ON position and / or in the OFF position, are aligned with corresponding openings of further elements (468) of the main switch (460) or of the adapter connecting module (400), so that the main switch (460) can be locked in the ON position and / or in the OFF position by means of a locking device (610), which can be guided through the openings.

10. The adapter system according to one of the preceding claims, wherein the adapter connecting module (400) furthermore comprises a transmission element (490), which is attached, preferably rotatably, to a part of the adapter connecting module (400), wherein the actuating lever (480) and the transmission element (490) are disposed and designed, so that the actuating lever (480) forces the transmission element (490) into an actuating position, when the actuating element (480) is in its actuating position, so that the actuating element (480) forces the lever switch (110) of the adapter (200) for busbars indirectly into their actuation position over the transmission element (490).

11. An adapter system according to claim 10, wherein the transmission element (490) is disposed and designed so that it can rotate about a predetermined angle at most.

12. The adapter system according to one of the preceding claims, wherein the adapter connecting module (400) furthermore has at least one measuring device for measuring an operating parameter of the adapter system and / or a microprocessor and / or an electronic power supply.

13. An adapter system according to one of the preceding claims, wherein the adapter connecting module (400) furthermore has a display device (610) for the user and / or a control panel (620) for the user.

14. The adapter system according to claim 2 or one of claims 3 to 13 with the reference back to claim 2, wherein the main switch (460) or a component of the main switch (460) comprises an actuating curve (464), which is designed so that it forces the actuating lever (480) of the adapter connecting module (400) into its actuation position when the main switch (460) is in its assembly position.

15. An adapter system according to claim 2 or 14 or according to one of the claims 3 to 13 with reference back to claim 2, wherein the adapter connecting module (400) furthermore has a blocking device (800), which can be moved from a blocking position into an assembly position, wherein the adapter connecting module 400), the main switch (460) and the blocking device (800) are designed so that the main switch cannot be moved from its switched-off position into its assembly position when the blocking device (800) is in its blocking position.

16. The adapter system according to claim 15, wherein the locking device (800) has a spring device, which pretensions the locking device (800) into its blocking position.

17. The adapter system according to claim 15 or 16, wherein the main switch (460) has, on one of its components, and / or the adapter connecting module (400) has, on one of its components, an opening (465), which is disposed and designed so that the blocking device 800) can be forced into its assembly position by means of a tool, which can be inserted through this opening (465) when the main switch (460) is in its switched-off position.

## Revendications

1. Système d'adaptateur pour rails collecteurs, qui comprend un adaptateur (200) pour rails collecteurs et un module de raccordement d'adaptateur (400), qui peuvent être reliés entre eux afin d'obtenir une position de fonctionnement du système d'adaptateur (200),
l'adaptateur pour rails collecteurs comprenant les éléments suivants :
- au moins deux liaisons de contact (210) pour le raccordement de l'adaptateur (200) à un système de rail collecteur avec au moins deux rails collecteurs (12, 14, 16),
- un boîtier (205), qui comprend au moins deux ouvertures (201, 202, 203) pour le logement chacun d'un pôle d'un premier dispositif de raccordement multipolaire du module de raccordement d'adaptateur (400),
- un dispositif de raccordement par câble (100), qui est disposé dans le boîtier (205) de l'adaptateur (200) et qui comprend une structure de serrage à ressort (120) et un commutateur à levier (110), qui sont conçus de façon à ce que la structure de serrage à ressort (120) exerce une force élastique qui d'un part précontraint le commutateur à levier (110) dans une position de mise en marche et d'autre part exerce une force sur tous les pôles utilisés du premier dispositif de raccordement, de façon à ce que ceux-ci ne puissent pas être retirés du dispositif de raccordement par câble (100) lorsque le commutateur à levier (110) se trouve dans sa position de mise en marche, le commutateur à levier (110) étant mobile à l'encontre de la force élastique exercée par la structure de serrage à ressort (120) de sa position de mise en marche vers une position d'actionnement, de façon à ce que, dans la position d'actionnement du commutateur à levier (110), tous les pôles utilisés du premier dispositif de raccordement puissent être retirés du dispositif de raccordement par câble (100),
le module de raccordement d'adaptateur (400) comprenant les éléments suivants :
- un boîtier (405), dont dépassent au moins deux pôles (401, 402, 403) du premier dispositif de raccordement (410) pour l'introduction dans les au moins deux ouvertures (201, 202, 203) du boîtier (205) de l'adaptateur (200) pour rails collecteurs et qui comprend un premier dispositif de raccordement (420) pour le raccordement d'un consommateur électrique, le premier dispositif de raccordement (410) étant relié, par l'intermédiaire d'un circuit en pont (440) pouvant être interrompu, avec le deuxième dispositif de raccordement (420),
- un commutateur principal (460), qui peut être déplacé avec un mouvement de va-et-vient entre une position de mise en marche et une position d'arrêt,
- un levier d'actionnement (480) pour l'actionnement du commutateur à levier (110) de l'adaptateur (200) pour rails collecteurs, le levier d'actionnement étant mobile entre une position de fonctionnement et une position d'actionnement,
le circuit en pont (440) se trouvant dans sa position de mise en marche lorsque le commutateur principal (460) se trouve dans la position de mise en marche et le circuit en pont (440) se trouvant dans sa position d'interruption lorsque le commutateur principal (460) se trouve dans sa position d'arrêt et
le commutateur principal (460) comprenant, au niveau d'un de ses composants, une ouverture (462) qui est disposée et conçue de façon à ce que le levier d'actionnement (480) du module de raccordement d'adaptateur (400) puisse être forcé, au moyen d'un outil qui peut être introduit à travers cette ouverture du commutateur principal (460) dans le boîtier (405) du module de raccordement d'adaptateur (400), dans sa position d'actionnement lorsque le commutateur principal (460) se trouve dans sa position d'arrêt, cette ouverture (462) du commutateur principal (460) étant fermée par un élément du module de raccordement d'adaptateur (400) lorsque le commutateur principal (460) se trouve dans sa position de mise en marche.

2. Système d'adaptateur pour rails collecteurs, qui comprend un adaptateur (200) pour rails collecteurs et un module de raccordement d'adaptateur (400), qui peuvent être reliés entre eux afin d'obtenir une position de fonctionnement du système d'adaptateur (200),
l'adaptateur pour rails collecteurs comprenant les éléments suivants :
- au moins deux liaisons de contact (210) pour le raccordement de l'adaptateur (200) à un système de rail collecteur avec au moins deux rails collecteurs (12, 14, 16),
- un boîtier (205), qui comprend au moins deux ouvertures (201, 202, 203) pour le logement chacun d'un pôle d'un premier dispositif de raccordement multipolaire du module de raccordement d'adaptateur (400),
- un dispositif de raccordement par câble (100), qui est disposé dans le boîtier (205) de l'adaptateur (200) et qui comprend une structure de serrage à ressort (120) et un commutateur à levier (110), qui sont conçus de façon à ce que la structure de serrage à ressort (120) exerce une force élastique qui d'une part précontraint le commutateur à levier (110) dans une position de mise en marche et d'autre part exerce une force sur tous les pôles utilisés du premier dispositif de raccordement, de façon à ce que ceux-ci ne puissent pas être retirés du dispositif de raccordement par câble (100) lorsque le commutateur à levier (110) se trouve dans sa position de mise en marche, le commutateur à levier (110) étant mobile à l'encontre de la force élastique exercée par la structure de serrage à ressort (120) de sa position de mise en marche vers une position d'actionnement, de façon à ce que, dans la position d'actionnement du commutateur à levier (110), tous les pôles utilisés du premier dispositif de raccordement puissent être retirés du dispositif de raccordement par câble (100),
le module de raccordement d'adaptateur (400) comprenant les éléments suivants :
- un boîtier (405), dont dépassent au moins deux pôles (401, 402, 403) du premier dispositif de raccordement (410) pour une introduction dans les au moins deux ouvertures (201, 202, 203) du boîtier (205) de l'adaptateur (200) pour rails collecteurs et qui comprend un deuxième dispositif de raccordement (420), au moins bipolaire, pour le raccordement d'un consommateur électrique, le premier dispositif de raccordement (410) étant relié avec le deuxième dispositif de raccordement (420) par l'intermédiaire d'un circuit en pont (440) pouvant être interrompu,
- un commutateur principal (460) qui peut être déplacé avec un mouvement de va-et-vient entre une position de mise en marche et une position d'arrêt,
- un levier d'actionnement (480) pour l'actionnement du commutateur à levier (110) de l'adaptateur (200) pour rails collecteurs, le levier d'actionnement étant mobile entre une position de fonctionnement et une position d'actionnement,
le circuit en pont (440) se trouvant dans sa position de mise en marche lorsque le commutateur principal (460) se trouve dans la position de mise en marche, et le circuit en pont (440) se trouvant dans sa position d'interruption lorsque le commutateur principal (460) se trouve dans sa position d'arrêt et
le commutateur principal (460) étant en outre conçu de façon à comprendre également une position de montage et à ce qu'il puisse être déplacé avec un mouvement de va-et-vient entre la position d'arrêt et la position de montage,
le module de raccordement d'adaptateur (400) et le commutateur principal (460) étant disposés et conçus de façon à ce que le levier d'actionnement (480) du module de raccordement d'adaptateur (400) soit forcé directement ou indirectement dans sa position d'actionnement lorsque le commutateur principal (460) se trouve dans sa position de montage.

3. Système d'adaptateur selon la revendication 1 ou 2, le commutateur principal (460) ou un composant (466) du commutateur principal (460) pouvant tourner d'un angle prédéterminé entre sa position de mise en marche et sa position d'arrêt.

4. Système d'adaptateur selon la revendication 2 ou la revendication 3, en référence à la revendication 2, le commutateur principal (460) ou un composant (466) du commutateur principal (460) pouvant tourner d'angle prédéterminé entre sa position d'arrêt et sa position de montage.

5. Système d'adaptateur selon l'une des revendications précédentes, le levier d'actionnement (480) du module de raccordement d'adaptateur (400) étant mobile dans sa direction longitudinale sur une distance prédéterminée entre sa position d'actionnement et sa position de fonctionnement.

6. Système d'adaptateur selon l'une des revendications précédentes, le module de raccordement d'adaptateur (400) comprenant, pour chaque pôle, un compartiment à fusibles pour le logement de fusibles (510), les compartiments à fusibles (502, 504, 506) étant mobiles entre une position de fonctionnement et une position de retrait, dans laquelle un fusible (510) peut être retiré du compartiment à fusible (502, 504, 506) par l'utilisateur.

7. Système d'adaptateur selon la revendication 6, le module de raccordement d'adaptateur (400) comprenant en outre un dispositif de verrouillage (520) pour les compartiments à fusibles (502, 504, 506), qui est couplé avec le commutateur principal (460) de façon à ce que le dispositif de verrouillage (520) empêche un mouvement de chaque compartiment à fusible (502, 504, 506) de sa position de fonctionnement en direction de la position de retrait, lorsque le commutateur principal (460) se trouve dans sa position de mise en marche.

8. Système d'adaptateur selon la revendication 7, le commutateur principal (460) et le dispositif de verrouillage (520) étant couplés directement ou indirectement, de façon à ce qu'un mouvement rotatif du commutateur principal (460) soit converti en un mouvement linéaire du dispositif de verrouillage (520).

9. Système d'adaptateur selon l'une des revendications précédentes, un élément de commande mobile (466) du commutateur principal (460), qui est déplacé entre la position de mise en marche et la position d'arrêt, comprenant des ouvertures qui sont alignées dans la position de mise en marche et/ou dans la position d'arrêt avec des ouvertures correspondantes d'autres éléments (468) du commutateur principal (460) ou du module de raccordement d'adaptateur (400) de façon à ce que le commutateur principal (460) puisse être verrouillé dans la position de mise en marche et/ou dans la position d'arrêt au moyen d'un dispositif à serrure (610) qui peut être guidé à travers les ouvertures.

10. Système d'adaptateur selon l'une des revendications précédentes, le module de raccordement d'adaptateur (400) comprenant en outre un élément de transmission (490) qui est fixé à une partie du module de raccordement d'adaptateur (400), de préférence de manière rotative, le levier d'actionnement (480) et l'élément de transmission (490) étant disposés et conçus de façon à ce que le levier d'actionnement (480) force l'élément de transmission (490) vers une position d'actionnement lorsque l'élément d'actionnement (480) se trouve dans sa position d'actionnement, de façon à ce que l'élément d'actionnement (480) force le commutateur à levier (110) de l'adaptateur (200) pour rails collecteurs indirectement vers sa position d'actionnement par l'intermédiaire de l'élément de transmission (490).

11. Système d'adaptateur selon la revendication 10, l'élément de transmission (490) étant disposé et conçu de façon à ce qu'il puisse tourner au maximum d'un angle prédéterminé.

12. Système d'adaptateur selon l'une des revendications précédentes, le module de raccordement d'adaptateur (400) comprenant en outre au moins un dispositif de mesure pour la mesure d'un paramètre de fonctionnement du système d'adaptateur et/ou un microprocesseur et/ou un bloc d'alimentation électronique.

13. Système d'adaptateur selon l'une des revendications précédentes, le module de raccordement d'adaptateur (400) comprenant en outre un dispositif d'affichage (610) pour l'utilisateur et/ou un panneau de commande (620) pour l'utilisateur.

14. Système d'adaptateur selon la revendication 2 ou une des revendications 3 à 13, en référence à la revendication 2, le commutateur principal (460) ou un composant du commutateur principal (460) comprenant une came d'actionnement (464) qui est conçue de façon à ce qu'elle force le levier d'actionnement (480) du module de raccordement d'adaptateur (400) vers sa position d'actionnement lorsque le commutateur principal (460) se trouve dans sa position de montage.

15. Système d'adaptateur selon la revendication 2 ou 14 ou selon l'une des revendications 3 à 13, en référence à la revendication 2, le module de raccordement d'adaptateur (400) comprenant en outre un dispositif de blocage (800), qui est mobile d'une position de blocage vers une position de montage, le module de raccordement d'adaptateur (400), le commutateur principal (460) et le dispositif de blocage (800) étant conçus de façon à ce que le commutateur principal ne puisse pas se déplacer de sa position d'arrêt vers sa position de montage lorsque le dispositif de blocage (800) se trouve dans sa position de blocage.

16. Système d'adaptateur selon la revendication 15, le dispositif de blocage (800) comprenant un dispositif à ressort qui précontraint le dispositif de blocage (800) dans sa position de blocage.

17. Système d'adaptateur selon la revendication 15 ou 16, le commutateur principal (460) comprenant, au niveau de ses composants et/ou le module de raccordement d'adaptateur (400) comprenant au niveau d'un de ses composants une ouverture (465) qui est disposée et conçue de façon à ce que le dispositif de blocage (800) puisse être forcé, au moyen d'un outil qui peut être introduit à travers cette ouverture (465), vers sa position de montage lorsque le commutateur principal (460) se trouve dans sa position d'arrêt.
